(19) Europäisches Patentamt / European Patent Office / Office européen des brevets

(11) **EP 4 629 339 A1**

(12) **EUROPEAN PATENT APPLICATION**
published in accordance with Art. 153(4) EPC

(43) Date of publication:
**08.10.2025 Bulletin 2025/41**

(21) Application number: **23942149.8**

(22) Date of filing: **17.11.2023**

(51) International Patent Classification (IPC):
***H01M 4/525*** *(2010.01)* ***H01M 10/0567*** *(2010.01)*

(52) Cooperative Patent Classification (CPC):
Y02E 60/10

(86) International application number:
**PCT/CN2023/132189**

(87) International publication number:
**WO 2024/259882 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2023 CN 202310741188**

(71) Applicant: **Contemporary Amperex Technology Co., Limited**
**Ningde, Fujian 352100 (CN)**

(72) Inventors:
- **QIN, Meng**
  **Ningde, Fujian 352100 (CN)**
- **YANG, Huiling**
  **Ningde, Fujian 352100 (CN)**
- **XU, Yue**
  **Ningde, Fujian 352100 (CN)**
- **CHEN, Qiaoqing**
  **Ningde, Fujian 352100 (CN)**
- **WEN, Yan**
  **Ningde, Fujian 352100 (CN)**
- **HUANG, Qisen**
  **Ningde, Fujian 352100 (CN)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **ELECTRODE SHEET AND PREPARATION METHOD THEREFOR, BATTERY, AND ELECTRIC DEVICE**

(57) This application relates to an electrode plate, a preparation method thereof, a battery, and an electric apparatus, where the electrode plate includes a current collector and an electrode film layer disposed on a surface of the current collector. A composition of the electrode film layer includes a silicon compound, and the silicon compound has a group represented by formula (A); where each $R_1$ is independently selected from any one of hydrogen, a substituted or unsubstituted alkyl group, an alkoxy group, a substituted or unsubstituted aryl group, a substituted or unsubstituted heteroaryl group, and an unsaturated hydrocarbon group. Not all $R_1$ groups are hydrogen; and "*" represents a site where the group represented by formula (A) is connected to another structure in the silicon compound.

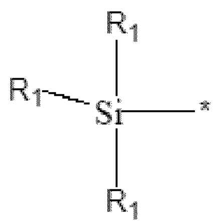

(A)

EP 4 629 339 A1

4

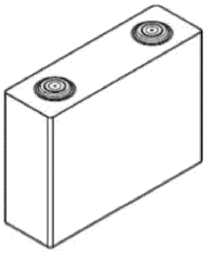

FIG. 1

## Description

### CROSS-REFERENCE TO RELATED APPLICATIONS

This application claims priority of Chinese Patent Application No. 202310741188.4, filed on June 21, 2023 and entitled "ELECTRODE PLATE, PREPARATION METHOD THEREOF, BATTERY, AND ELECTRIC APPARATUS ", which is incorporated herein by reference in its entirety.

### TECHNICAL FIELD

This application relates to the field of battery technology, and in particular, to an electrode plate, a preparation method thereof, a battery, and an electric apparatus.

### BACKGROUND

Secondary batteries such as lithium batteries have gained increasingly wide applications due to their characteristics of being clean and renewable. As the supply of lithium resources becomes increasingly strained, batteries with more abundant raw material reserves and lower costs, such as sodium batteries and potassium batteries, have come into focus.

However, with the rapid development of the new energy industry, the demand for new energy transportation tools such as electric vehicles and electric bicycles has grown significantly, along with higher requirements imposed on their performance. Since batteries are a critical power source for electric vehicles, increasingly high requirements are also imposed on the performance of batteries. Traditional batteries are increasingly unable to meet the demands of people and require further improvement.

### SUMMARY

According to various embodiments of this application, this application provides an electrode plate, a preparation method thereof, a battery, and an electric apparatus, aimed at improving the Coulombic efficiency and cycling performance of the battery.

This application is implemented through the following technical solutions.

According to a first aspect of this application, an electrode plate is provided, where the electrode plate includes a current collector and an electrode film layer disposed on a surface of the current collector. A composition of the electrode film layer includes a silicon compound, and the silicon compound has a group represented by formula (A):

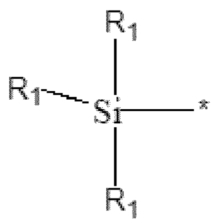

(A)

,

where each $R_1$ is independently selected from any one of hydrogen, a substituted or unsubstituted alkyl group, an alkoxy group, a substituted or unsubstituted aryl group, a substituted or unsubstituted heteroaryl group, and an unsaturated hydrocarbon group, and not all $R_1$ groups are hydrogen; and

"*" represents a site where the group represented by formula (A) is connected to another structure in the silicon compound.

In the above electrode plate, the silicon compound in the electrode film layer contains the specific group represented by formula (A). On one hand, the silicon compound can capture moisture in the electrode film layer, and when prepared into a battery, the silicon compound can also capture moisture in the electrolyte, thereby reducing moisture in the battery system and minimizing side reactions caused by moisture. On the other hand, when prepared into a battery, the silicon compound in the electrode plate can react with a corrosive byproduct HF generated in the electrolyte, thereby capturing the corrosive byproducts such as HF. These two major aspects work together to enhance the stability of the battery, thus improving the Coulombic efficiency and cycling performance of the battery.

In some embodiments, each $R_1$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted chain alkoxy group having 1 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, and an alkynyl group having 2 to 30 carbon atoms, and optionally, each $R_1$ is independently selected from any one of hydrogen, an unsubstituted chain alkyl group having 1 to 15 carbon atoms, a chain alkyl group having 1 to 15 carbon atoms and substituted by halogen, an unsubstituted cycloalkyl group having 3 to 15 carbon atoms, a cycloalkyl group having 3 to 15 carbon atoms and substituted by halogen, a chain alkoxy group having 1 to 15 carbon atoms, a substituted or unsubstituted aryl group having 6 to 20 ring atoms, a substituted or unsubstituted heteroaryl group having 5 to 20 ring atoms, an alkenyl group having 2 to 15 carbon atoms, and an alkynyl group having 2 to 15 carbon atoms.

In some embodiments, the silicon compound further contains a D group, and the D group is selected from at least one of a borate group, a phosphate group, a phosphinate group, a sulfonate group, and an amino group, and optionally, the D group is selected from at least one of a borate group, a phosphate group, and a phosphinate group, and the D group is connected to the group represented by formula (A) through an oxygen atom;

It is found through research that when the silicon compound also contains a borate structure, during application in battery preparation, the silicon compound can participate in a formation process of an SEI (or CEI) film, further promoting the improvement of the film structure and enhancing its toughness, thereby further improving the cycling performance of the battery.

It is found through further research that when the silicon compound in the electrode plate also contains a phosphate or phosphinate structure, during cyclic use, the dissolution amount of transition metals in the active material of the electrode plate can be reduced, enhancing the compositional stability of the electrode plate and further improving the efficiency and cycling performance of the battery.

Research indicates that the reason for the above phenomena may be that phosphate or phosphinate groups on the surface of the electrode plate can react with oxidative substances generated during the charge-discharge process of the battery, reducing parasitic oxidation currents, suppressing the decomposition of electrode materials by oxidative substances, and enhancing the compositional stability of the electrode plate during the charge-discharge process. In contrast, in traditional techniques, when the above silicon compound is added to the electrolyte, the probability of contact with oxidative substances generated during the charge-discharge process is extremely low, making it essentially unable to effectively suppress metal dissolution and only achieving a moisture removal function.

Optionally, the D group is an amino group, and the D group is connected to the group represented by formula (A) through a nitrogen atom.

In some embodiments, the silicon compound includes at least one represented by formulas (1) to (5):

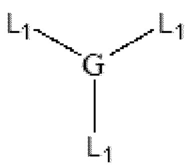
(1)

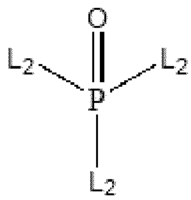
(2)

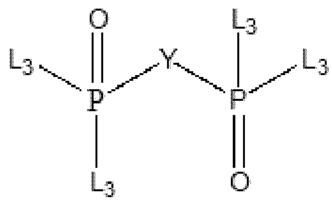
(3)

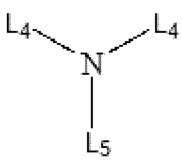
(4)

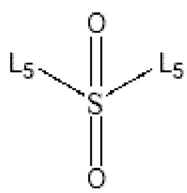
(5)

,

where G is selected from boron or phosphorus, each $L_1$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl

group having 2 to 30 carbon atoms, the group represented by formula (A), and $-OT_1$, at least one $L_1$ group is $-OT_1$, $T_1$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_1$ group is the group represented by formula (A);

each $L_2$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_2$, at least one $L_2$ group is $-OT_2$, $T_2$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_2$ group is the group represented by formula (A);

Y is selected from a single bond or oxygen, $L_3$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_3$, at least one $L_3$ group is $-OT_3$, $T_3$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_3$ group is the group represented by formula (A);

each $L_4$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, and the group represented by formula (A), and at least one $L_4$ group is the group represented by formula (A); and

each $L_5$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_3$, at least one $L_5$ group is $-OT_4$, $T_4$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_4$ group is the group represented by formula (A).

In some embodiments, the silicon compound satisfies any one of the following conditions (1) to (5):

(1) at least two $L_1$ groups are selected from $-OT_1$;

optionally, $T_1$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and
further optionally, at least two $T_1$ groups are selected from the group represented by formula (A);

(2) at least two $L_2$ groups are selected from $-OT_2$;

optionally, $T_2$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and
further optionally, at least two $T_2$ groups are selected from the group represented by formula (A);

(3) at least two $L_3$ groups are selected from $-OT_3$;

optionally, $T_3$ is selected from any one of hydrogen, the group represented by formula (A), an unsubstituted chain alkyl group having 1 to 30 carbon atoms, a chain alkyl group having 1 to 30 carbon atoms and substituted by

halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and

further optionally, at least two $T_3$ groups are selected from the group represented by formula (A);

(4) each $L_4$ is independently selected from any one of hydrogen, an unsubstituted chain alkyl group having 1 to 30 carbon atoms, a chain alkyl group having 1 to 30 carbon atoms and substituted by halogen, an unsubstituted cycloalkyl group having 3 to 30 carbon atoms, a cycloalkyl group having 3 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 15 carbon atoms, an alkynyl group having 2 to 15 carbon atoms, and the group represented by formula (A); and

optionally, at least two $L_4$ groups are selected from the group represented by formula (A); and

(5) at least two $L_5$ groups are selected from $-OT_5$;

optionally, $T_4$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and

further optionally, at least two $T_4$ groups are selected from the group represented by formula (A).

In some embodiments, the silicon compound includes at least one represented by formulas (1) to (3); and optionally, G is phosphorus.

In some embodiments, the silicon compound includes at least one of tris(trimethylsilyl) borate, tris(trimethylsilyl) phosphate, tris(trimethylsilyl) phosphite, bis(trimethylsilyl) difluorophosphate, tetrakis(trimethylsilyl) pyrophosphate, bis(trimethylsilyl) monofluoropyrophosphate, bis(trimethylsilyl) fluorophosphite, trimethylsilyl difluorophosphate, hexamethyldisilazane, bis(trimethylsilyl) vinyl phosphate, tris(vinyldimethylsilyl) phosphate, tris(phenyldimethylsilyl) phosphate, trimethylsilyl methanesulfonate, heptamethyldisilazane, and ethylhexamethyldisilazane. In some embodiments, the silicon compound includes at least one of tris(trimethylsilyl) phosphite, tris(trimethylsilyl) phosphate, bis(trimethylsilyl) fluorophosphite, tris(trimethylsilyl) borate, hexamethyldisilazane, bis(trimethylsilyl) difluorophosphate, tetrakis(trimethylsilyl) pyrophosphate, bis(trimethylsilyl) vinyl phosphate, tris(vinyldimethylsilyl) phosphate, tris(phenyldimethylsilyl) phosphate, and trimethylsilyl methanesulfonate.

Optionally, the silicon compound includes at least one of tris(trimethylsilyl) phosphite, tris(trimethylsilyl) phosphate, bis(trimethylsilyl) fluorophosphite, bis(trimethylsilyl) difluorophosphate, tetrakis(trimethylsilyl) pyrophosphate, bis(trimethylsilyl) vinyl phosphate, tris(vinyldimethylsilyl) phosphate, and tris(phenyldimethylsilyl) phosphate.

Optionally, the silicon compound includes at least one of tris(trimethylsilyl) phosphite, tris(trimethylsilyl) phosphate, bis(trimethylsilyl) fluorophosphite, bis(trimethylsilyl) difluorophosphate, tetrakis(trimethylsilyl) pyrophosphate, bis(trimethylsilyl) vinyl phosphate, tris(vinyldimethylsilyl) phosphate, and tris(phenyldimethylsilyl) phosphate.

When the silicon compound in the electrode plate also contains a phosphate or phosphinate structure, during cyclic use, the dissolution amount of transition metals in the active material of the electrode plate can be reduced, enhancing the compositional stability of the electrode plate and further improving the efficiency and cycling performance of the battery.

In some embodiments, in the electrode film layer, a mass percentage of the silicon compound is 0.1% to 1.2%; and

optionally, the mass percentage of the silicon compound is 0.2% to 1%.

Adjusting the mass percentage of the silicon compound in the electrode film layer enhances the moisture removal property and byproduct adsorption capability of the electrode plate and also minimizes the adverse effects of the silicon compound on other components in the electrode film layer as much as possible.

In some embodiments, the composition of the electrode film layer further includes a positive electrode active material, and the positive electrode active material satisfies one of the following conditions (1) to (3):

(1) the positive electrode active material includes any one of a positive electrode active material for lithium-ion batteries, a positive electrode active material for sodium-ion batteries, and a positive electrode active material for potassium-ion batteries,

(2) the positive electrode active material contains a transition metal element, and

optionally, the transition metal includes iron element; and

(3) in the electrode film layer, a mass percentage of the positive electrode active material is 70% to 99.8%.

In some embodiments, the positive electrode active material is a positive electrode active material for sodium-ion batteries.

As the supply of lithium resources becomes increasingly strained, sodium-ion batteries, whose positive active material has more abundant raw material reserves and lower costs, have come into focus. However, compared to positive electrode active materials for lithium-ion batteries, traditional positive electrode active materials for sodium-ion batteries exhibit stronger moisture absorption and can adsorb moisture more easily, severely hindering the performance improvement of sodium-ion batteries. By adopting the technical solution of this application, the stability of sodium-ion batteries can be enhanced, thereby improving the Coulombic efficiency and cycling performance of sodium-ion batteries.

In some embodiments, the positive electrode active material includes at least one of $NaFePO_4$, $Na_3V_2(PO_4)_3$, $Na_4Fe_3(PO_4)_2(P_2O_7)$, $NaM1PO_4F$, $Na_aM2_bM3_c(CN)_6$, and $Na_3(VO_y)_2(PO_4)_2F_{(3-2y)}$.

M2 and M3 are each independently selected from at least one of Ni, Cu, Fe, Mn, Co, and Zn; $0 < a \leq 2$; $0 < b < 1$; $0 < c < 1$; M1 is selected from at least one of V, Fe, Mn, and Ni; and $0 \leq y \leq 1$.

In some embodiments, the composition of the electrode film layer further includes a conductive agent and a binder.

Optionally, in the electrode film layer, a mass percentage of the conductive agent is 1% to 20%.

Optionally, in the electrode film layer, a mass percentage of the binder is 1% to 10%.

In some embodiments, a water content of the electrode film layer is ≤ 400 ppm.

Optionally, the water content of the electrode film layer is ≤ 350 ppm.

According to a second aspect of this application, a preparation method of the electrode plate according to the first aspect is provided, including the following step:
applying a film layer slurry onto a surface of a current collector to form an electrode film layer for preparing an electrode plate.

A composition of the film layer slurry includes a silicon compound.

According to a third aspect of this application, a battery is provided, where the battery includes the electrode plate according to the first aspect or an electrode plate prepared using the preparation method of the electrode plate according to the second aspect.

The above battery exhibits high Coulombic efficiency and good cyclic use performance.

According to a fourth aspect of this application, an electric apparatus is provided, where the electric apparatus includes the battery according to the third aspect.

## BRIEF DESCRIPTION OF DRAWINGS

To more clearly illustrate the technical solutions of the embodiments of this application, the drawings required for use in the embodiments of this application are briefly introduced below. Obviously, the drawings described below are merely some embodiments of this application. For persons of ordinary skill in the art, other drawings can be obtained based on the drawings without creative effort. In the accompanying drawings:

FIG. 1 is a schematic diagram of an embodiment of a battery;
FIG. 2 is an exploded view of FIG. 1;
FIG. 3 is a schematic diagram of an embodiment of a battery pack;
FIG. 4 is an exploded view of FIG. 3; and
FIG. 5 is a schematic diagram of an embodiment of an electric apparatus using a battery as a power source.

Reference signs:
1. battery pack; 2. upper box body; 3. lower box body; 4. battery; 41. housing body; 42. electrode assembly; 43. cover plate; and 5. electric apparatus.

## DESCRIPTION OF EMBODIMENTS

The embodiments of the technical solutions of this application are described in detail below with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meanings as commonly understood by persons skilled in the technical field of this application; the terms used herein are only for the purpose of describing specific embodiments and are not intended to limit this application; the terms "include", "comprise", and any variations thereof in the specification, claims, and the above description of drawings of this application are intended to cover non-exclusive inclusion.

In the description of the embodiments of this application, the technical terms "first", "second", and the like are only used to distinguish between different objects and should not be understood as indicating or implying relative importance or implicitly indicating the number, specific order, or primary-secondary relationship of the technical features indicated. In the description of the embodiments of this application, "multiple" means two or more, unless explicitly and specifically defined otherwise.

In this specification, reference to "embodiment" means that specific features, structures, or characteristics described with reference to the embodiment may be incorporated in at least one embodiment of this application. The appearance of this phrase in various positions in the specification does not necessarily refer to the same embodiment, nor does it refer to an independent or alternative embodiment mutually exclusive with other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that the contextually associated objects are in an "or" relationship.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise explicitly specified and defined, the technical terms "mounting", "connection", "join", "fastening", and the like should be understood in a broad sense, for example, as a fixed connection, a detachable connection, or an integral formation; a mechanical connection or an electrical connection; a direct connection or an indirect connection through an intermediate medium; or an internal communication between two elements or an interaction relationship between two elements. For persons of ordinary skill in the art, the specific meanings of the above terms in the embodiments of this application can be understood based on specific circumstances.

In this application, the term "alkyl group" refers to a group formed by an alkane losing one hydrogen atom, for example, methane loses one hydrogen atom to form a methyl group; "alkenyl group or alkynyl group" refers to a group formed by an alkene or alkyne losing one hydrogen atom, for example, ethylene loses one hydrogen atom to form a vinyl group, or acetylene loses one hydrogen atom to form an ethynyl group.

The term "chain alkane" refers to an alkane in which carbon atoms are connected by carbon-carbon single bonds without forming a ring and the remaining valence bonds are combined with hydrogen, including straight-chain alkanes and branched-chain alkanes.

In this application, the number of carbon atoms in "a chain alkyl group having 1 to 30 carbon atoms" may be 1 to 30, including 1, 2, 3, 4, 5, 6, 7, 8, 9, 10, 11, 12, 13, 14, 15, 16, 17, 18, 19, 20, 21, 22, 23, 24, 25, 26, 27, 28, 29, and 30. Non-limiting examples include methyl, ethyl, n-propyl, isopropyl, n-butyl, isobutyl, 2-ethylbutyl, 3,3-dimethylbutyl, n-pentyl, isopentyl, neopentyl, 1-methylpentyl, 3-methylpentyl, 2-ethylpentyl, 4-methyl-2-pentyl, n-hexyl, 1-methylhexyl, 2-ethylhexyl, 2-butylhexyl, n-heptyl, 1-methylheptyl, 2,2-dimethylheptyl, 2-ethylheptyl, n-octyl, n-nonyl, and n-decyl.

In this application, "number of ring atoms" refers to the number of atoms forming a ring, and when the ring is substituted by a substituent, the atoms contained in the substituent are not included in the ring-forming atoms. The same applies to the "number of ring atoms" described below unless otherwise specified, for example, the number of ring atoms in a benzene ring is 6, the number of ring atoms in a naphthalene ring is 10, and the number of ring atoms in a thiophene ring is 5.

"Aryl group" refers to a hydrocarbon group containing at least one aromatic ring, including non-fused ring aryl groups and fused ring aryl groups. A fused ring aryl group refers to a group formed by two or more aromatic rings connected through two shared adjacent ring atoms, that is, a fused ring. Non-limiting examples of aryl groups include, but are not limited to, phenyl, naphthyl, anthryl, phenanthryl, biphenyl, terphenyl, benzo[9,10]phenanthryl, pyrenyl, benzofluoranthenyl, chrysenyl, and dibenzocycloalkyl (for example, fluorenyl and dihydroanthryl).

In this application, "heteroaryl group" refers to a compound with a closed-ring conjugated system and heteroatoms. The heteroatoms may be at least one of boron, oxygen, nitrogen, phosphorus, silicon, and sulfur, and the number of the heteroatoms in the heteroaryl group may be 1, 2, 3, 4, 5, or more. The heteroaryl group may be a monocyclic heteroaryl

group or a fused ring heteroaryl group. It should be understood that a fused aromatic (hetero)aryl group connected with one or more (2 or more) carbonyl groups is also considered as a heteroaryl group. Specific examples of heteroaryl groups include, but are not limited to, thienyl, furyl, pyrrolyl, imidazolyl, thiazolyl, oxazolyl, oxadiazolyl, triazolyl, pyridyl, triazinyl, acridinyl, pyridazinyl, pyrazinyl, quinolinyl, quinazolinyl, quinoxalinyl, phenoxazinyl, phthalazinyl, pyridopyrimidinyl, pyridopyrazinyl, pyrazinopyrazinyl, isoquinolinyl, indolyl, carbazolyl, benzoxazolyl, benzimidazolyl, benzothiazolyl, benzocarbazolyl, benzothienyl, dibenzothienyl, thienothienyl, benzofuryl, phenanthrolinyl, isoxazolyl, thiadiazolyl, phenothiazinyl, phenoxathiinyl, dibenzodioxinyl, quinazolinonyl, benzothiadiazolyl, benzotriazolyl, thianthrenyl, phenothiazinyl, phenoxathiinyl, thianthrene tetraoxide group, phenothiazine dioxide group, anthraquinonyl, phenoxathiin dioxide group, and thioxanthene dioxide group.

In this application, the term "substituted or unsubstituted" means that the functional group described thereafter may or may not have a substituent.

"Alkoxy group" refers to a group with a structure of -OR, where R is an alkyl group, to be specific, an alkyl group as defined above is connected to an adjacent group through an oxygen atom. A phrase containing this term, such as "an alkoxy group having 1 to 30 carbon atoms", means that the alkyl portion contains 1 to 30 carbon atoms. Examples of alkoxy groups include, but are not limited to, methoxy ($-O-CH_3$ or -OMe), ethoxy ($-O-CH_2CH_3$ or -OEt), and tert-butoxy ($-O-C(CH_3)_3$ or -OtBu).

In this application, a halogen group includes chlorine, fluorine, bromine, and iodine.

In this application, when two groups are connected by a single connection point, for example, in

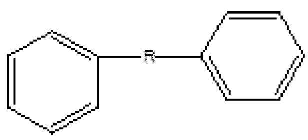

,

when R is selected from a single bond, it means that the two groups are directly connected by a single bond without requiring a specific group for connection, that is,

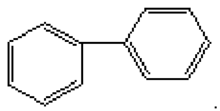

.

In summary of the background, the power and cycling performance of traditional secondary batteries are increasingly unable to meet the demands of people. Traditional techniques primarily focus on developing new materials or adjusting the loading amount of active materials on the electrode plate to improve the efficiency and cycling performance of batteries. However, the development of new materials is a long and challenging process with no substantial progress to date, and adjusting the loading amount of active materials on the electrode plate brings other negative effects, such as excessive loading, leading to cracking of the electrode plate, and thus ultimately limiting the improvements in cycling performance.

Based on this, after extensive creative exploration, an electrode plate capable of improving the efficiency and cycling performance of batteries has been obtained in this application.

An embodiment of this application provides an electrode plate, where the electrode plate includes a current collector and an electrode film layer disposed on a surface of the current collector. A composition of the electrode film layer includes a silicon compound, and the silicon compound has a group represented by formula (A):

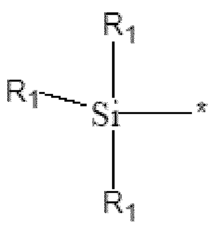

(A)

,

where each $R_1$ is independently selected from any one of hydrogen, a substituted or unsubstituted alkyl group, an alkoxy group, a substituted or unsubstituted aryl group, a substituted or unsubstituted heteroaryl group, and an unsaturated hydrocarbon group, and not all $R_1$ groups are hydrogen; and

"*" represents a site where the group represented by formula (A) is connected to another structure in the silicon compound.

In the above electrode plate, the silicon compound in the electrode film layer contains the specific group represented by formula (A). On one hand, the silicon compound can capture moisture in the electrode film layer, and when prepared into a battery, the silicon compound can also capture moisture in the electrolyte, thereby reducing moisture in the battery system and minimizing side reactions caused by moisture. On the other hand, when prepared into a battery, the silicon compound in the electrode plate can react with a corrosive byproduct HF generated in the electrolyte, thereby capturing the corrosive byproducts such as HF. These two major aspects work together to enhance the stability of the battery, thus improving the Coulombic efficiency and cycling performance of the battery.
It should be noted that the current collector in the electrode plate has two opposite surfaces in its thickness direction, and the electrode film layer is disposed on either or both of the two opposite surfaces of the current collector. Further, the above electrode film layer may be any functional layer disposed on the surface of the current collector, including but not limited to an active layer and other functional layers, for example, an active layer formed by mixing the silicon compound with an active material, or a functional layer newly formed by directly applying the silicon compound.
In some embodiments, the above electrode film layer is an active layer.
It can be understood that " *" representing a site where the group represented by formula (A) is connected to another structure in the silicon compound means that at least one electron in the group represented by formula (A) is connected to an electron in another structure of the silicon compound through a covalent bond.
In some embodiments, each $R_1$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted chain alkoxy group having 1 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, and an alkynyl group having 2 to 30 carbon atoms.
It can be understood that in this application, all the $R_1$ groups are selected from a same range, but the specific types of the groups selected may be the same or different.
Optionally, each $R_1$ is independently selected from any one of hydrogen, an unsubstituted chain alkyl group having 1 to 15 carbon atoms, a chain alkyl group having 1 to 15 carbon atoms and substituted by halogen, an unsubstituted cycloalkyl group having 3 to 15 carbon atoms, a cycloalkyl group having 3 to 15 carbon atoms and substituted by halogen, a chain alkoxy group having 1 to 15 carbon atoms, a substituted or unsubstituted aryl group having 6 to 20 ring atoms, a substituted or unsubstituted heteroaryl group having 5 to 20 ring atoms, an alkenyl group having 2 to 15 carbon atoms, and an alkynyl group having 2 to 15 carbon atoms.
In some embodiments, each $R_1$ is independently selected from any one of hydrogen, an unsubstituted chain alkyl group having 1 to 15 carbon atoms, a chain alkyl group having 1 to 15 carbon atoms and substituted by halogen, an unsubstituted cycloalkyl group having 3 to 15 carbon atoms, a cycloalkyl group having 3 to 15 carbon atoms and substituted by halogen, a chain alkoxy group having 1 to 15 carbon atoms, an unsubstituted aryl group having 6 to 20 ring atoms, an aryl group having 6 to 20 ring atoms and substituted by a C1-C5 alkyl group or halogen, an unsubstituted heteroaryl group having 5 to 20 ring atoms, a heteroaryl group having 5 to 20 ring atoms and substituted by a C1-C5 alkyl group or halogen, an alkenyl group having 2 to 15 carbon atoms, and an alkynyl group having 2 to 15 carbon atoms.
Optionally, the above heteroaryl group contains at least one heteroatom.
In some embodiments, the heteroatom in the above heteroaryl group includes at least one of boron, oxygen, nitrogen, phosphorus, silicon, and sulfur.
Optionally, the heteroatom includes at least one of B, O, and N.
In some embodiments, each $R_1$ is independently selected from any one of hydrogen, an unsubstituted chain alkyl group having 1 to 10 carbon atoms, a chain alkyl group having 1 to 10 carbon atoms and substituted by halogen, an unsubstituted cycloalkyl group having 3 to 10 carbon atoms, a cycloalkyl group having 3 to 10 carbon atoms and substituted by halogen, a chain alkoxy group having 1 to 10 carbon atoms, an unsubstituted aryl group having 6 to 10 ring atoms, an aryl group having 6 to 10 ring atoms and substituted by a C1-C5 alkyl group or halogen, an unsubstituted heteroaryl group having 5 to 10 ring atoms, a heteroaryl group having 5 to 10 ring atoms and substituted by a C1-C5 alkyl group or halogen, an alkenyl group having 2 to 10 carbon atoms, and an alkynyl group having 2 to 10 carbon atoms.
In some embodiments, each $R_1$ is independently selected from any one of hydrogen, a chain alkyl group having 1 to 5 carbon atoms, a chain alkyl group having 1 to 5 carbon atoms and substituted by halogen, an unsubstituted cycloalkyl group having 3 to 6 carbon atoms, a cycloalkyl group having 3 to 6 carbon atoms and substituted by halogen, a chain alkoxy group having 1 to 5 carbon atoms, an unsubstituted aryl group having 6 to 5 ring atoms, an aryl group having 6 to 10 ring atoms and substituted by a C1-C5 alkyl group or halogen, an unsubstituted heteroaryl group having 5 to 10 ring atoms, a heteroaryl group having 5 to 10 ring atoms and substituted by a C1-C5 alkyl group or halogen, an alkenyl group having 2 to 5 carbon atoms, and an alkynyl group having 2 to 5 carbon atoms.
In some embodiments, all the $R_1$ groups are the same.

In some embodiments, the halogen is selected from F.

In some embodiments, the silicon compound further contains a D group, and the D group is selected from at least one of a borate group, a phosphate group, a phosphinate group, a sulfonate group, and an amino group.

It can be understood that the D group is connected to the group represented by formula (A) through an oxygen atom on the D group, thereby forming a silyl ester group.

Optionally, the D group is selected from at least one of a borate group, a phosphate group, and a phosphinate group, and the D group is connected to the group represented by formula (A) through an oxygen atom.

It is found through research that when the silicon compound contains a borate structure, during application in battery preparation, the silicon compound can participate in a formation process of a SEI (or CEI) film, further promoting the improvement of the film structure and enhancing its toughness, thereby further improving the cycling performance of the battery.

It is found through further research that when the silicon compound in the electrode plate also contains a phosphate or phosphinate structure, during cyclic use, the dissolution amount of transition metals in the active material of the electrode plate can be reduced, enhancing the compositional stability of the electrode plate and further improving the efficiency and cycling performance of the battery.

Research indicates that the reason for the above phenomena may be that phosphate or phosphinate groups on the surface of the electrode plate can react with oxidative substances generated during the charge-discharge process of the battery, reducing parasitic oxidation currents, suppressing the decomposition of electrode materials by oxidative substances, and enhancing the compositional stability of the electrode plate during the charge-discharge process.

In some embodiments, the silicon compound includes at least one represented by formulas (1) to (5):

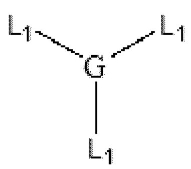
(1)

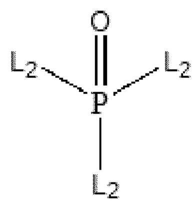
(2)

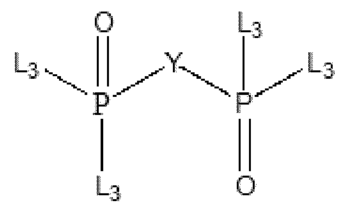
(3)

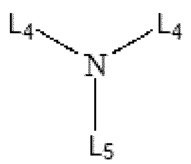
(4)

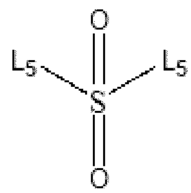
(5)

G is selected from boron or phosphorus; each $L_1$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_1$; at least one $L_1$ group is $-OT_1$; $T_1$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group; and at least one $T_1$ group is the group represented by formula (A).

It can be understood that the silicon compound represented by formula (1) contains at least one group represented by formula (A).

In some embodiments, each $L_1$ is independently selected from any one of a halogen atom, a chain alkyl group having 1 to 15 carbon atoms, a chain alkyl group having 1 to 15 carbon atoms and substituted by halogen, a cycloalkyl group having 3 to 15 carbon atoms, an aryl group having 6 to 30 ring atoms, a heteroaryl group having 5 to 25 ring atoms, an alkenyl group having 2 to 15 carbon atoms, an alkynyl group having 2 to 15 carbon atoms, the group represented by formula (A), and $-OT_1$.

In some embodiments, each $L_1$ is independently selected from any one of a halogen atom, a chain alkyl group having 1 to 10 carbon atoms, a chain alkyl group having 1 to 10 carbon atoms and substituted by halogen, a cycloalkyl

group having 3 to 10 carbon atoms, an aryl group having 6 to 15 ring atoms, a heteroaryl group having 5 to 15 ring atoms, an alkenyl group having 2 to 10 carbon atoms, an alkynyl group having 2 to 10 carbon atoms, the group represented by formula (A), and $-OT_1$.

In some embodiments, each $L_1$ is independently selected from any one of a halogen atom, a chain alkyl group having 1 to 5 carbon atoms, a chain alkyl group having 1 to 5 carbon atoms and substituted by halogen, a cycloalkyl group having 3 to 6 carbon atoms, an aryl group having 6 to 10 ring atoms, a heteroaryl group having 5 to 10 ring atoms, an alkenyl group having 2 to 5 carbon atoms, an alkynyl group having 2 to 5 carbon atoms, the group represented by formula (A), and $-OT_1$.

In some embodiments, all the $L_1$ groups are the same or different.

Further, all the $T_1$ groups are the same or different.

In some embodiments, all the $L_1$ groups are the same.

In some embodiments, at least two $L_1$ groups are selected from $-OT_1$.

In some embodiments, all the $L_1$ groups are $-OT_1$.

Optionally, $T_1$ is selected from any one of hydrogen, the group represented by formula (A), a chain alkyl group having 1 to 30 carbon atoms, a chain alkyl group having 1 to 30 carbon atoms and substituted by halogen, an aryl group having 6 to 30 ring atoms, a heteroaryl group having 5 to 30 ring atoms, an alkenyl group having 2 to 30 carbon atoms, and an alkynyl group having 2 to 30 carbon atoms.

In some embodiments, $T_1$ is selected from any one of hydrogen, the group represented by formula (A), an alkyl group having 1 to 15 carbon atoms, an alkyl group having 1 to 15 carbon atoms and substituted by halogen, an aryl group having 6 to 15 ring atoms, a heteroaryl group having 5 to 15 ring atoms, an alkenyl group having 2 to 15 carbon atoms, and an alkynyl group having 2 to 15 carbon atoms, and at least one $T_1$ group is the group represented by formula (A).

In some embodiments, $T_1$ is selected from any one of hydrogen, the group represented by formula (A), an alkyl group having 1 to 10 carbon atoms, an alkyl group having 1 to 10 carbon atoms and substituted by halogen, an aryl group having 6 to 10 ring atoms, a heteroaryl group having 5 to 10 ring atoms, an alkenyl group having 2 to 10 carbon atoms, and an alkynyl group having 2 to 10 carbon atoms, and at least one $T_1$ group is the group represented by formula (A).

In some embodiments, $T_1$ is selected from any one of hydrogen, the group represented by formula (A), an alkyl group having 1 to 5 carbon atoms, an alkyl group having 1 to 5 carbon atoms and substituted by halogen, an aryl group having 6 to 10 ring atoms, a heteroaryl group having 5 to 10 ring atoms, an alkenyl group having 2 to 5 carbon atoms, and an alkynyl group having 2 to 5 carbon atoms, and at least one $T_1$ group is the group represented by formula (A).

In some embodiments, at least two $T_1$ groups are selected from the group represented by formula (A).

In some embodiments, all the $T_1$ groups are selected from the group represented by formula (A).

Each $L_2$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_2$; at least one $L_2$ group is selected from $-OT_2$; $T_2$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group; and at least one $T_2$ group is selected from the group represented by formula (A).

In other words, formula (2) contains at least one group represented by formula (A).

In some embodiments, each $L_2$ is independently selected from any one of a halogen atom, a chain alkyl group having 1 to 30 carbon atoms, a chain alkyl group having 1 to 30 carbon atoms and substituted by halogen, a cycloalkyl group having 3 to 30 carbon atoms, an aryl group having 6 to 50 ring atoms, a heteroaryl group having 5 to 50 ring atoms, an alkenyl group having 2 to 30 carbon atoms, an alkynyl group having 2 to 30 carbon atoms, the group represented by formula (A), and $-OT_2$.

In some embodiments, each $L_2$ is independently selected from any one of a halogen atom, a chain alkyl group having 1 to 15 carbon atoms, a chain alkyl group having 1 to 15 carbon atoms and substituted by halogen, a cycloalkyl group having 3 to 15 carbon atoms, an aryl group having 6 to 25 ring atoms, a heteroaryl group having 5 to 25 ring atoms, an alkenyl group having 2 to 15 carbon atoms, an alkynyl group having 2 to 15 carbon atoms, the group represented by formula (A), and $-OT_2$.

In some embodiments, each $L_2$ is independently selected from any one of a halogen atom, a chain alkyl group having 1 to 10 carbon atoms, a chain alkyl group having 1 to 10 carbon atoms and substituted by halogen, a cycloalkyl group having 3 to 10 carbon atoms, an aryl group having 6 to 15 ring atoms, a heteroaryl group having 5 to 15 ring atoms, an alkenyl group having 2 to 10 carbon atoms, an alkynyl group having 2 to 10 carbon atoms, the group represented by formula (A), and $-OT_2$.

In some embodiments, each $L_2$ is independently selected from any one of a halogen atom, a chain alkyl group having 1 to 5 carbon atoms, a chain alkyl group having 1 to 5 carbon atoms and substituted by halogen, a cycloalkyl group having 3 to 6 carbon atoms, an aryl group having 6 to 10 ring atoms, a heteroaryl group having 5 to 10 ring atoms, an alkenyl

group having 2 to 5 carbon atoms, an alkynyl group having 2 to 5 carbon atoms, the group represented by formula (A), and $-OT_2$.

In some embodiments, all the $L_2$ groups are the same or different.

In some embodiments, all the $L_2$ groups are the same.

In some embodiments, at least two $L_2$ groups are selected from $-OT_2$.

In some embodiments, all the $L_2$ groups are selected from $-OT_2$.

In some embodiments, $T_2$ is selected from any one of hydrogen, the group represented by formula (A), a chain alkyl group having 1 to 30 carbon atoms, a chain alkyl group having 1 to 30 carbon atoms and substituted by halogen, an aryl group having 6 to 30 ring atoms, a heteroaryl group having 5 to 30 ring atoms, an alkenyl group having 2 to 30 carbon atoms, and an alkynyl group having 2 to 30 carbon atoms.

In some embodiments, $T_2$ is selected from any one of hydrogen, the group represented by formula (A), an alkyl group having 1 to 15 carbon atoms, an alkyl group having 1 to 15 carbon atoms and substituted by halogen, an aryl group having 6 to 15 ring atoms, a heteroaryl group having 5 to 15 ring atoms, an alkenyl group having 2 to 15 carbon atoms, and an alkynyl group having 2 to 15 carbon atoms; and at least one $T_2$ group is the group represented by formula (A).

In some embodiments, $T_2$ is selected from any one of hydrogen, the group represented by formula (A), an alkyl group having 1 to 10 carbon atoms, an alkyl group having 1 to 10 carbon atoms and substituted by halogen, an aryl group having 6 to 10 ring atoms, a heteroaryl group having 5 to 10 ring atoms, an alkenyl group having 2 to 10 carbon atoms, and an alkynyl group having 2 to 10 carbon atoms; and at least one $T_2$ group is the group represented by formula (A).

In some embodiments, $T_2$ is selected from any one of hydrogen, the group represented by formula (A), an alkyl group having 1 to 5 carbon atoms, an alkyl group having 1 to 5 carbon atoms and substituted by halogen, an aryl group having 6 to 10 ring atoms, a heteroaryl group having 5 to 10 ring atoms, an alkenyl group having 2 to 5 carbon atoms, and an alkynyl group having 2 to 5 carbon atoms; and at least one $T_2$ group is selected from the group represented by formula (A).

Further optionally, at least two $T_2$ groups are selected from the group represented by formula (A).

In some embodiments, each $T_2$ is selected from the group represented by formula (A).

Y is selected from a single bond or oxygen, each $L_3$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_3$; at least one $L_3$ group is $-OT_3$; $T_3$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group; and at least one $T_3$ group is the group represented by formula (A).

In some embodiments, each $L_3$ is independently selected from any one of a halogen atom, a chain alkyl group having 1 to 30 carbon atoms, a chain alkyl group having 1 to 30 carbon atoms and substituted by halogen, a cycloalkyl group having 3 to 30 carbon atoms, an aryl group having 6 to 50 ring atoms, a heteroaryl group having 5 to 50 ring atoms, an alkenyl group having 2 to 30 carbon atoms, an alkynyl group having 2 to 30 carbon atoms, the group represented by formula (A), and $-OT_3$.

In some embodiments, each $L_3$ is independently selected from any one of a halogen atom, a chain alkyl group having 1 to 15 carbon atoms, a chain alkyl group having 1 to 15 carbon atoms and substituted by halogen, a cycloalkyl group having 3 to 15 carbon atoms, an aryl group having 6 to 25 ring atoms, a heteroaryl group having 5 to 25 ring atoms, an alkenyl group having 2 to 15 carbon atoms, an alkynyl group having 2 to 15 carbon atoms, the group represented by formula (A), and $-OT_3$.

In some embodiments, each $L_3$ is independently selected from any one of a halogen atom, a chain alkyl group having 1 to 10 carbon atoms, a cycloalkyl group having 3 to 10 carbon atoms and substituted by halogen, an aryl group having 6 to 15 ring atoms, a heteroaryl group having 5 to 15 ring atoms, an alkenyl group having 2 to 10 carbon atoms, an alkynyl group having 2 to 10 carbon atoms, the group represented by formula (A), and $-OT_3$.

In some embodiments, each $L_3$ is independently selected from any one of a halogen atom, a chain alkyl group having 1 to 5 carbon atoms, a chain alkyl group having 1 to 5 carbon atoms and substituted by halogen, a cycloalkyl group having 3 to 6 carbon atoms, an aryl group having 6 to 10 ring atoms, a heteroaryl group having 5 to 10 ring atoms, an alkenyl group having 2 to 5 carbon atoms, an alkynyl group having 2 to 5 carbon atoms, the group represented by formula (A), and $-OT_3$.

In some embodiments, all the $L_3$ groups are the same or different.

In some embodiments, two $L_3$ groups are selected from $-OT_3$.

further optionally, at least two $T_3$ groups are selected from the group represented by formula (A).

In some embodiments, all the $T_3$ groups are selected from the group represented by formula (A).

Each $L_4$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring

atoms, an alkenyl group having 2 to 30 carbon atoms, an alkynyl group having 2 to 30 carbon atoms, and the group represented by formula (A); and at least one $L_4$ group is the group represented by formula (A).

In other words, formula (4) contains at least one group represented by formula (A).

In some embodiments, each $L_4$ is independently selected from any one of hydrogen, a chain alkyl group having 1 to 30 carbon atoms, a chain alkyl group having 1 to 30 carbon atoms and substituted by halogen, a cycloalkyl group having 3 to 30 carbon atoms, an aryl group having 6 to 50 ring atoms, a heteroaryl group having 5 to 50 ring atoms, an alkenyl group having 2 to 30 carbon atoms, an alkynyl group having 2 to 30 carbon atoms, and the group represented by formula (A).

In some embodiments, each $L_4$ is independently selected from any one of hydrogen, a chain alkyl group having 1 to 15 carbon atoms, a chain alkyl group having 1 to 15 carbon atoms and substituted by halogen, a cycloalkyl group having 3 to 15 carbon atoms, an aryl group having 6 to 25 ring atoms, a heteroaryl group having 5 to 25 ring atoms, an alkenyl group having 2 to 15 carbon atoms, an alkynyl group having 2 to 15 carbon atoms, and the group represented by formula (A).

In some embodiments, each $L_4$ is independently selected from any one of hydrogen, a chain alkyl group having 1 to 10 carbon atoms, a chain alkyl group having 1 to 10 carbon atoms and substituted by halogen, a cycloalkyl group having 3 to 10 carbon atoms, an aryl group having 6 to 15 ring atoms, a heteroaryl group having 5 to 15 ring atoms, an alkenyl group having 2 to 10 carbon atoms, an alkynyl group having 2 to 10 carbon atoms, and the group represented by formula (A).

In some embodiments, each $L_4$ is independently selected from any one of hydrogen, a chain alkyl group having 1 to 5 carbon atoms, a chain alkyl group having 1 to 5 carbon atoms and substituted by halogen, a cycloalkyl group having 3 to 6 carbon atoms, an aryl group having 6 to 10 ring atoms, a heteroaryl group having 5 to 10 ring atoms, an alkenyl group having 2 to 5 carbon atoms, an alkynyl group having 2 to 5 carbon atoms, and the group represented by formula (A).

In some embodiments, all the $L_4$ groups are the same or different.

In some embodiments, at least two $L_4$ groups are selected from the group represented by formula (A).

Each $L_5$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_5$; at least one $L_5$ group is $-OT_4$; $T_4$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group; and at least one $T_4$ group is the group represented by formula (A).

In other words, formula (5) contains at least one group represented by formula (A).

In some embodiments, each $L_5$ is independently selected from any one of a halogen atom, a chain alkyl group having 1 to 30 carbon atoms, a chain alkyl group having 1 to 30 carbon atoms and substituted by halogen, a cycloalkyl group having 3 to 30 carbon atoms, an aryl group having 6 to 50 ring atoms, a heteroaryl group having 5 to 50 ring atoms, an alkenyl group having 2 to 30 carbon atoms, an alkynyl group having 2 to 30 carbon atoms, the group represented by formula (A), and $-OT_5$.

In some embodiments, each $L_5$ is independently selected from any one of a halogen atom, a chain alkyl group having 1 to 15 carbon atoms, a chain alkyl group having 1 to 15 carbon atoms and substituted by halogen, a chain alkyl group having 1 to 15 carbon atoms and substituted by halogen, a cycloalkyl group having 3 to 15 carbon atoms, an aryl group having 6 to 25 ring atoms, a heteroaryl group having 5 to 25 ring atoms, an alkenyl group having 2 to 15 carbon atoms, an alkynyl group having 2 to 15 carbon atoms, the group represented by formula (A), and $-OT_5$.

In some embodiments, each $L_5$ is independently selected from any one of a halogen atom, a chain alkyl group having 1 to 10 carbon atoms, a chain alkyl group having 1 to 10 carbon atoms and substituted by halogen, a chain alkyl group having 1 to 10 carbon atoms and substituted by halogen, a cycloalkyl group having 3 to 10 carbon atoms, an aryl group having 6 to 15 ring atoms, a heteroaryl group having 5 to 15 ring atoms, an alkenyl group having 2 to 10 carbon atoms, an alkynyl group having 2 to 10 carbon atoms, the group represented by formula (A), and $-OT_5$.

In some embodiments, each $L_5$ is independently selected from any one of a halogen atom, a chain alkyl group having 1 to 5 carbon atoms, a chain alkyl group having 1 to 5 carbon atoms and substituted by halogen, a cycloalkyl group having 3 to 6 carbon atoms, an aryl group having 6 to 10 ring atoms, a heteroaryl group having 5 to 10 ring atoms, an alkenyl group having 2 to 5 carbon atoms, an alkynyl group having 2 to 5 carbon atoms, the group represented by formula (A), and $-OT_5$.

In some embodiments, all the $L_5$ groups are the same or different.

In some embodiments, at least two $L_5$ groups are selected from $-OT_5$.

In some embodiments, all the $L_5$ groups are selected from $-OT_5$.

In some embodiments, $T_4$ is selected from any one of hydrogen, the group represented by formula (A), a chain alkyl group having 1 to 30 carbon atoms, a chain alkyl group having 1 to 30 carbon atoms and substituted by halogen, an aryl group having 6 to 30 ring atoms, a heteroaryl group having 5 to 30 ring atoms, an alkenyl group having 2 to 30 carbon atoms, and an alkynyl group having 2 to 30 carbon atoms.

In some embodiments, $T_4$ is selected from any one of hydrogen, the group represented by formula (A), a chain

alkyl group having 1 to 15 carbon atoms, a chain alkyl group having 1 to 15 carbon atoms and substituted by halogen, an aryl group having 6 to 15 ring atoms, a heteroaryl group having 5 to 15 ring atoms, an alkenyl group having 2 to 15 carbon atoms, and an alkynyl group having 2 to 15 carbon atoms.

In some embodiments, $T_4$ is selected from any one of hydrogen, the group represented by formula (A), a chain alkyl group having 1 to 10 carbon atoms, a chain alkyl group having 1 to 10 carbon atoms and substituted by halogen, an aryl group having 6 to 10 ring atoms, a heteroaryl group having 5 to 10 ring atoms, an alkenyl group having 2 to 10 carbon atoms, and an alkynyl group having 2 to 10 carbon atoms.

In some embodiments, $T_4$ is selected from any one of hydrogen, the group represented by formula (A), a chain alkyl group having 1 to 5 carbon atoms, a chain alkyl group having 1 to 5 carbon atoms and substituted by halogen, an aryl group having 6 to 10 ring atoms, a heteroaryl group having 5 to 10 ring atoms, an alkenyl group having 2 to 5 carbon atoms, and an alkynyl group having 2 to 5 carbon atoms.

In some embodiments, at least two $T_4$ groups are selected from the group represented by formula (A).

In some embodiments, all the $T_4$ groups are selected from the group represented by formula (A).

In some embodiments, the silicon compound includes at least one represented by formulas (1) to (3).

Optionally, G is phosphorus.

In some embodiments, the silicon compound includes at least one of tris(trimethylsilyl) borate, tris(trimethylsilyl) phosphate, tris(trimethylsilyl) phosphite, bis(trimethylsilyl) difluorophosphate, tetrakis(trimethylsilyl) pyrophosphate, bis(trimethylsilyl) monofluoropyrophosphate, bis(trimethylsilyl) fluorophosphite, trimethylsilyl difluorophosphate, hexamethyldisilazane, bis(trimethylsilyl) vinyl phosphate, tris(vinyldimethylsilyl) phosphate, tris(phenyldimethylsilyl) phosphate, trimethylsilyl methanesulfonate, heptamethyldisilazane, and ethylhexamethyldisilazane.

In some embodiments, the silicon compound includes at least one of tris(trimethylsilyl) phosphite, tris(trimethylsilyl) phosphate, bis(trimethylsilyl) fluorophosphite, tris(trimethylsilyl) borate, hexamethyldisilazane, bis(trimethylsilyl) difluorophosphate, tetrakis(trimethylsilyl) pyrophosphate, bis(trimethylsilyl) vinyl phosphate, tris(vinyldimethylsilyl) phosphate, tris(phenyldimethylsilyl) phosphate, and trimethylsilyl methanesulfonate.

optionally, the silicon compound includes at least one of tris(trimethylsilyl) phosphite, tris(trimethylsilyl) phosphate, bis(trimethylsilyl) fluorophosphite, bis(trimethylsilyl) difluorophosphate, tetrakis(trimethylsilyl) pyrophosphate, bis(trimethylsilyl) vinyl phosphate, tris(vinyldimethylsilyl) phosphate, and tris(phenyldimethylsilyl) phosphate.

In some embodiments, in the electrode film layer, a mass percentage of the silicon compound is 0.1% to 1.2%.

Optionally, the mass percentage of the silicon compound is 0.2% to 1%.

Adjusting the mass percentage of the silicon compound in the electrode film layer enhances the moisture removal property and byproduct adsorption capability of the electrode plate and also minimizes the adverse effects of the silicon compound on other components in the electrode film layer as much as possible.

Values of the above "0.1% to 1.2%" include a minimum value and a maximum value of this range, as well as every value between the minimum value and the maximum value. Specific examples include, but are not limited to, point values in the embodiments and the following point values: 0.1%, 0.2%, 0.3%, 0.4%, 0.5%, 0.6%, 0.7%, 0.8%, 0.9%, 1%, or a range defined by any two of these values, such as 0.1%-0.2%, 0.1%-0.3%, 0.1%-0.4%, 0.1%-0.5%, 0.1%-0.6%, 0.1%-0.7%, 0.1%-0.8%, 0.1%-0.9%, 0.2%-0.3%, 0.2%-0.4%, 0.2%-0.5%, 0.2%-0.6%, 0.2%-0.7%, 0.2%-0.8%, 0.2%-0.9%, 0.2%-1%, 0.3%-0.4%, 0.3%-0.5%, 0.3%-0.6%, 0.3%-0.7%, 0.3%-0.8%, 0.3%-0.9%, 0.3%-1%, 0.4%-0.5%, 0.4%-0.6%, 0.4%-0.7%, 0.4%-0.8%, 0.4%-0.9%, 0.4%-1%, 0.5%-0.6%, 0.5%-0.7%, 0.5%-0.8%, 0.5%-0.9%, 0.5%-1%, 0.6%-0.7%, 0.6%-0.8%, 0.6%-0.9%, or 0.6%-1%.

In some embodiments, the composition of the electrode film layer further includes a positive electrode active material.

The positive electrode active material may be a positive electrode active material commonly used in this application, for example, a lithium-ion positive electrode active material or a sodium-ion positive electrode active material.

In some embodiments, the positive electrode active material includes any one of a positive electrode active material for lithium-ion batteries, a positive electrode active material for sodium-ion batteries, and a positive electrode active material for potassium-ion batteries.

In some embodiments, the positive electrode active material is a positive electrode active material for sodium-ion batteries.

As the supply of lithium resources becomes increasingly strained, secondary batteries with more abundant raw material reserves and lower costs, such as sodium-ion batteries, have come into focus. However, compared to positive electrode active materials for lithium-ion batteries, traditional positive electrode active materials for sodium-ion batteries exhibit stronger moisture absorption and can adsorb moisture more easily, severely hindering the performance improvement of sodium-ion batteries. By adopting the technical solution of this application, the stability of sodium-ion batteries can be enhanced, thereby improving the Coulombic efficiency and cycling performance of sodium-ion batteries.

In some embodiments, the positive electrode active material contains a transition metal element.

The transition metal includes at least one of chromium, manganese, iron, cobalt, nickel, copper, zinc, palladium, silver, platinum, and gold.

Optionally, the transition metal includes iron element.

The positive electrode active material for lithium-ion batteries, the positive electrode active material for sodium-ion batteries, and the positive electrode active material for potassium-ion batteries are hereinafter referred to as lithium-ion active material, sodium-ion active material, and potassium-ion active material, respectively.

Further, for example, the lithium-ion active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. Examples of the lithium transition metal oxide may include, but are not limited to, at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (also abbreviated as NCM333), $LiNi_{0.5}Co_{0.2}Mn_{0.3}O_2$ (also abbreviated as NCM523), $LiNi_{0.5}Co_{0.25}Mn_{0.25}O_2$ (also abbreviated as NCM211), $LiNi_{0.6}Co_{0.2}Mn_{0.2}O_2$ (also abbreviated as NCM622), $LiNi_{0.8}Co_{0.1}Mn_{0.1}O_2$ (abbreviated as NCM811)), lithium nickel cobalt aluminum oxide (for example, $LiNi_{0.8}Co_{0.15}Al_{0.05}O_2$), and modified compounds thereof. Examples of the olivine-structured lithium-containing phosphate may include, but are not limited to, at least one of lithium iron phosphate (for example, $LiFePO_4$, abbreviated as LFP), lithium manganese phosphate (for example, $LiMnPO_4$), and lithium manganese iron phosphate. In any embodiment of this application, the molecular formula of the lithium-ion active material is $LiFe_xMn_{(1-x)}PO_4$, where x is any value from 0 to 1.

It can be understood that when x is 0, $LiFe_xMn_{(1-x)}PO_4$ is $LiMnPO_4$, lithium manganese phosphate; and when x is 1, $LiFe_xMn_{(1-x)}PO_4$is $LiFePO_4$, lithium iron phosphate (LFP).

It should be noted that the lithium content in the above exemplified positive electrode materials refers to the content in an unused state. During use, the battery is repeatedly charged and discharged, and Li in the positive electrode active material changes during the charge-discharge process. That is, the molar subscript of Li in the positive electrode active material in a battery product is not always 1 and varies. Further, a variation range may be (0-1.2).

For example, $LiFe_xMn_{(1-x)}PO_4$ may be further expressed as $Li_yFe_xMn_{(1-x)}PO_4$, where y ranges from 0 to 1.1.

For example, for a ternary material $Li_y(Ni_aCo_bMn_c)_{(1-d)}M_dO_{(2-x)}A_z$, y ranges from 0.2 to 1.2; a+b+c=1; $0 \le d \le 1$; $0 \le x < 2$; M is one or more of Zr, Sr, B, Ti, Mg, Sn, and Al; and A is one or more of S, N, F, Cl, Br, and I.

The charge-discharge process of the battery is accompanied with intercalation, deintercalation, and consumption of Li, and the molar content of Li varies when the battery is discharged to different states. The above limitation on y includes the molar contents of Li in different charge and discharge states of the battery. Further, a voltage of the battery is typically from 2 V to 5 V

For example, the sodium-ion active material may include at least one of the following materials: at least one of sodium transition metal oxide, polyanionic compound, and Prussian blue compound. However, this application is not limited to these materials, and may also use other conventional well-known materials that can be used as positive electrode active materials for sodium-ion batteries.

In an optional technical solution of this application, in the sodium transition metal oxide, the transition metal includes at least one of Mn, Fe, Ni, Co, Cr, Cu, Ti, Zn, V, Zr, and Ce. The sodium transition metal oxide is, for example, $Na_xMO_2$, where M includes at least one or more of Ti, V, Mn, Co, Ni, Fe, Cr, and Cu, and $0 < x \le 1$.

In an optional technical solution of this application, the polyanionic compound may be a compound having sodium ions, transition metal ions, and tetrahedral $(YO_4)^{n-}$ anionic units. The transition metal at least includes at least one of Mn, Fe, Ni, Co, Cr, Cu, Ti, Zn, V, Zr, and Ce; Y includes at least one of P, S, and Si; and n represents a valence state of $(YO_4)^{n-}$.

The polyanionic compound may alternatively be a compound having sodium ions, transition metal ions, tetrahedral $(YO_4)^{n-}$ anionic units, and halogen anions. The transition metal includes at least one of Mn, Fe, Ni, Co, Cr, Cu, Ti, Zn, V, Zr, and Ce; Y includes at least one of P, S, and Si; n represents a valence state of $(YO_4)^{n-}$; and the halogen may be at least one of F, Cl, and Br.

The polyanionic compound may alternatively be a compound having sodium ions, tetrahedral $(YO_4)^{n-}$anionic units, polyhedral units $(ZO_y)^{m+}$, and optional halogen anions. Y includes at least one of P, S, and Si; n represents a valence state of $(YO_4)^{n-}$; Z represents a transition metal, at least including at least one of Mn, Fe, Ni, Co, Cr, Cu, Ti, Zn, V, Zr, and Ce; m represents a valence state of $(ZO_y)^{m+}$; and the halogen may be at least one of F, Cl, and Br.

The polyanionic compound is, for example, at least one of $NaFePO_4$, $Na_3V_2(PO_4)_3$ (sodium vanadium phosphate, abbreviated as NVP), $Na_4Fe_3(PO_4)_2(P_2O_7)$ (NFPP), $NaM1PO_4F$, and $Na_3(VO_y)_2(PO_4)_2F_{(3-2y)}$.

M1 is at least one of V, Fe, Mn, and Ni, and $0 \le y \le 1$.

The Prussian blue compound may be a compound having sodium ions, transition metal ions, and cyanide ions ($CN^-$). The transition metal includes at least one of Mn, Fe, Ni, Co, Cr, Cu, Ti, Zn, V, Zr, and Ce. The Prussian blue compound is, for example, $Na_aM2_bM3_c(CN)_6$, where M2 and M3 are each independently selected from at least one of Ni, Cu, Fe, Mn, Co, and Zn, $0 < a \le 2$, $0 < b < 1$, and $0 < c < 1$.

In any embodiment of this application, in the electrode film layer, a mass percentage of the positive electrode active material is 70% to 99.8%.

In any embodiment of this application, the composition of the electrode film layer further includes a conductive agent and a binder.

In an example in which the above electrode plate is a positive electrode, the conductive agent may be a conductive agent commonly used in the art, including, but not limited to, at least one of graphite, carbon nanotubes, nanofiber, carbon black, and graphene. Specifically, the conductive agent may be selected from at least one of SP, KS-6, acetylene black, Ketjen black ECP with a branched structure, SFG-6, vapor-grown carbon fiber VGCF, carbon nanotubes CNTs, graphene, and a composite conductive agent thereof.

The binder may be at least one of polyvinylidene fluoride (PVDF), polytetrafluoroethylene (PTFE), vinylidene fluoride-tetrafluoroethylene-propylene terpolymer, vinylidene fluoride-hexafluoropropylenetetrafluoroethylene terpolymer, tetrafluoroethylene-hexafluoropropylene copolymer, hydrogenated nitrile rubber, styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS), and fluorine-containing acrylate resin.

Optionally, in the electrode film layer, a mass percentage of the conductive agent is 1% to 20%.

Optionally, in the electrode film layer, a mass percentage of the binder is 1% to 10%.

In some embodiments, a water content of the electrode film layer is ≤ 400 ppm.

Optionally, the water content of the electrode film layer is ≤ 350 ppm.

In some embodiments, a thickness of the above electrode film layer is 30 μm to 200 μm.

In any embodiment of this application, the current collector may be a metal foil or a composite current collector. For example, an aluminum foil may be used as the metal foil. The composite current collector may include a polymer material substrate and a metal layer formed on at least one surface of the polymer material substrate. The composite current collector may be formed by forming a metal material on a polymer material substrate.

In some embodiments, the metal material is selected from any one of aluminum, aluminum alloy, nickel, nickel alloy, titanium, titanium alloy, silver, and silver alloy.

In some embodiments, the polymer material substrate includes at least one of polypropylene (PP), polyethylene terephthalate (PET), polybutylene terephthalate (PBT), polystyrene (PS), and polyethylene (PE).

An embodiment of this application further provides a preparation method of an electrode plate, including the following step S10.

Step S10. Apply a film layer slurry onto a surface of a current collector to form an electrode film layer for preparing an electrode plate, where a composition of the film layer slurry includes the above silicon compound.

The type and proportion of the silicon compound are as described above and are not described herein again.

In any embodiment of this application, taking a positive electrode plate as an example, the positive electrode plate can be prepared as follows: the above components for preparing the positive electrode plate are dispersed in a solvent (for example, N-methylpyrrolidone) to form a positive electrode slurry; and the positive electrode slurry is applied onto a current collector, followed by processes such as drying and cold pressing to obtain the positive electrode plate. A solid content of the positive electrode slurry is 40 wt% to 80 wt%, and a viscosity at room temperature is adjusted to 5000 mPa·s to 25000 mPa·s. The positive electrode slurry is applied onto a surface of a positive electrode current collector, dried and cold-pressed using a cold rolling machine to form a positive electrode plate.

In some embodiments, an areal density of the positive electrode active material in the positive electrode plate is 0.018 g/cm$^2$ to 0.05 g/cm$^2$.

Areal density of positive electrode active material = mass of positive electrode active material / area of positive electrode plate.

An embodiment of this application provides a battery, where the battery includes the above electrode plate or an electrode plate prepared using the above preparation method of an electrode plate.

The above battery exhibits high Coulombic efficiency and good cycling performance.

In the above battery, at least one of the negative electrode plate or the positive electrode plate is selected from the above electrode plate. Further, the above electrode plate is a positive electrode plate, and the battery further includes a negative electrode plate, a separator, and an electrolyte. A non-limiting introduction to the negative electrode plate, separator, and electrolyte is provided herein.

[Negative electrode plate]

The negative electrode plate includes a current collector and a negative electrode active layer loaded on a surface of the current collector.

A composition of the negative electrode active layer includes a negative electrode active material.

The above negative electrode active material may be a negative electrode active material commonly used in this application.

In any embodiment of this application, the above negative electrode active material includes at least one of mesophase carbon microspheres, graphite, glassy carbon, carbon nanotubes, carbon-carbon composite material, carbon fiber, hard carbon, soft carbon, silicon-based material, tin-based material, magnesium-based material, and iron-based material.

Optionally, specific examples of the above negative electrode active material include, but are not limited to, at least one of mesophase carbon microspheres, natural graphite, artificial graphite, graphene, glassy carbon, carbon nanotubes, carbon fiber, hard carbon, soft carbon, iron oxide, tin oxide, silicon oxide, magnesium oxide, and silicon-carbon composite.

In any embodiment of this application, the above battery is a lithium battery, and a mass percentage of the negative electrode active material in the negative electrode active layer is 70% to 100%.

In any embodiment of this application, the composition of the above negative electrode active layer further includes a negative electrode conductive agent and a negative electrode binder.

In any embodiment of this application, the negative electrode conductive agent may be a conductive material commonly used in the art, including, but not limited to, at least one of graphite, carbon nanotubes, nanofiber, carbon black, and graphene. Specifically, the negative electrode conductive agent may be selected from at least one of SP, KS-6, acetylene black, Ketjen black ECP with a branched structure, SFG-6, vapor-grown carbon fiber VGCF, carbon nanotubes CNTs, graphene, and a composite conductive agent thereof.

Based on a total weight of the negative electrode active layer, a weight percentage of the negative electrode conductive agent in the negative electrode active layer is 0 wt% to 20 wt%.

The negative electrode binder may be a binder commonly used in the art and may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Based on the total weight of the negative electrode active layer, a weight percentage of the negative electrode binder in the negative electrode active layer is 0 wt% to 30 wt%.

In any embodiment of this application, the negative electrode active layer further optionally includes another additive, for example, a thickener such as sodium carboxymethyl cellulose (CMC-Na). Based on the total weight of the negative electrode active layer, a weight percentage of the another additive in the negative electrode active layer is 0 wt% to 15 wt%.

In any embodiment of this application, the current collector in the negative electrode plate may be a metal foil or a composite current collector. For example, a copper foil may be used as the metal foil.

The composite current collector may include a polymer material substrate and a metal layer formed on at least one surface of the polymer material substrate. The composite current collector may be formed by forming a metal material on a polymer material substrate.

In some embodiments, the metal material is selected from any one of aluminum, aluminum alloy, nickel, nickel alloy, titanium, titanium alloy, silver, and silver alloy.

In some embodiments, the polymer material substrate includes at least one of polypropylene (PP), polyethylene terephthalate (PET), polybutylene terephthalate (PBT), polystyrene (PS), and polyethylene (PE).

In any embodiment of this application, the negative electrode plate may be prepared as follows: the components for preparing the negative electrode plate, such as the negative electrode active material, conductive agent, binder, and any other components, are dispersed in a solvent (for example, deionized water) to form a negative electrode slurry; and the negative electrode slurry is applied onto a negative electrode current collector, followed by processes such as drying and cold pressing to obtain aa negative electrode plate. A solid content of the negative electrode slurry is 30 wt% to 70 wt%, and a viscosity at room temperature is adjusted to 2000 mPa·s to 10000 mPa·s. The obtained negative electrode slurry is applied onto the negative electrode current collector, dried, and cold-pressed using a roller to obtain a negative electrode plate.

In some embodiments, an areal density of the negative electrode active material in the negative electrode plate is 0.005 g/cm$^2$ to 0.03 g/cm$^2$.

Areal density of negative electrode active material = mass of negative electrode active material / area of negative electrode plate.

The above electrolyte exhibits excellent infiltration the electrode plate, especially when the active material loading on the electrode plate is high and the thickness is large, enabling faster wetting of the electrode plate, improving the interfacial wettability of the electrode, and thereby enhancing the capacity exertion efficiency of the battery.

It should be noted that if the battery is an "anode-free sodium battery", no negative electrode active material is added during the preparation of the negative electrode plate, only a negative electrode current collector or a current collector coated with a conductive agent is used as a nominal negative electrode, but the negative electrode current collector does not have the function of a negative electrode in a substantial sense. After the battery is assembled and subjected to the first charge, the sodium element in the positive electrode migrates to the surface of the negative electrode current collector, forming a sodium metal layer on the negative electrode current collector, thereby obtaining a negative

electrode in the true sense.

[Separator]

The separator is disposed between the positive electrode plate and the negative electrode plate.

This application imposes no particular limitation on the type of the separator, and any well-known porous structure separator with good chemical stability and mechanical stability can be used.

In some embodiments, a material of the separator may be selected from at least one of glass fiber, non-woven fabric, polyethylene, polypropylene, and polyvinylidene fluoride. The separator may be a single-layer film or a multi-layer composite film, and this is not particularly limited. When the separator is a multi-layer composite film, the materials of all layers may be the same or different, with no particular limitation.

A thickness of the separator is controlled to be 2 μm to 15 μm. Optionally, the thickness of the separator is controlled to be 2 μm to 13 μm.

[Electrolyte]

The electrolyte includes an electrolytic salt and a solvent.

In some embodiments, the electrolytic salt may be selected from electrolytic salts commonly used in the art, such as lithium-ion electrolytic salts, sodium-ion electrolytic salts, and potassium-ion electrolytic salts, where the specific type is selected based on the type of the positive electrode active material. For example, if the positive electrode active material is a lithium-ion positive electrode active material, a lithium-ion electrolytic salt is selected as the electrolytic salt; and if the positive electrode active material is a sodium-ion positive electrode active material, a sodium-ion electrolytic salt is selected as the electrolytic salt.

In an example, lithium-ion electrolytic salts include, but are not limited to, one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO2F2), lithium difluoro(oxalato)phosphate (LiDFOP), and lithium tetrafluoro(oxalato)phosphate (LiTFOP).

In an example, sodium-ion electrolytic salts include, but are not limited to, one or more of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), ethylsulfonylethane (ESE), ethylene glycol dimethyl ether, ethylene glycol diethyl ether, diethylene glycol dimethyl ether, triethylene glycol dimethyl ether, tetraethylene glycol dimethyl ether, 1,3-dioxocyclopentane, tetrahydrofuran, methyl tetrahydrofuran, diphenyl ether, and crown ether.

Optionally, the solvent is selected from one or more of ethylene glycol dimethyl ether, ethylene glycol diethyl ether, diethylene glycol dimethyl ether, triethylene glycol dimethyl ether, tetraethylene glycol dimethyl ether, 1,3-dioxocyclopentane, tetrahydrofuran, methyl tetrahydrofuran, diphenyl ether, and crown ether.

The above ether solvents can construct a stable electrode/electrolyte interface on a sodium metal negative electrode (including no negative electrode, where no negative electrode is designed in this application), forming a stable solid electrolyte interface (SEI), and thus reducing electrochemical polarization.

In some embodiments, in the electrolyte, a concentration of the electrolytic salt is typically 0.5 mol/L to 8 mol/L; and the concentration of the electrolytic salt is typically 1 mol/L to 4 mol/L.

In some embodiments, the electrolyte further optionally includes an additive. For example, the additive may include a negative electrode film-forming additive, a positive electrode film-forming additive, and an additive capable of improving certain battery performance, such as an additive for improving overcharge performance of batteries and an additive for improving high-temperature performance or low-temperature performance of batteries.

In some embodiments, the above battery is a lithium battery, a sodium battery, or a potassium battery.

Further, the above battery is an anode-free sodium battery.

This application imposes no particular limitation on the shape of the battery, and the battery may be cylindrical, square, or of any other shape. For example, FIG. 1 shows a battery 4 of a square structure as an example.

In some embodiments, referring to FIG. 2, the housing may include a housing body 41 and a cover plate 43. The housing body 41 may include a base plate and side plates connected onto the base plate, and the base plate and the side

plates enclose an accommodating cavity. The housing body 41 has an opening communicating with the accommodating cavity, and the cover plate 43 can cover the opening to close the accommodating cavity.

The positive electrode plate, negative electrode plate, and separator may be wound or laminated to form an electrode assembly 42. The electrode assembly 42 is packaged in the accommodating cavity. The electrolyte infiltrates the electrode assembly 42. The battery 4 may include one or more electrode assemblies 42, and the quantity may be adjusted as required.

This application also provides an electric apparatus, where the electric apparatus includes the above battery.

Further, in the above electric apparatus, the battery may exist in the form of a battery cell or may be further assembled into the form of a battery pack.

FIG. 3 and FIG. 4 show a battery pack 1 as an example. The battery pack 1 includes a battery box and one or more batteries 4 disposed in the battery box. The battery box includes an upper box body 2 and a lower box body 3, where the upper box body 2 can cover the lower box body 3 to form an enclosed space for the battery 4.

Multiple batteries 4 may be arranged in the battery box in any manner.

The above battery or the battery pack formed by assembling the battery may be used as a power source for an electric apparatus or as an energy storage unit for an electric apparatus.

The electric apparatus may include, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

FIG. 5 shows an electric apparatus 5 as an example. This electric apparatus 5 is a battery electric vehicle, a hybrid electric vehicle, a plug-in hybrid electric vehicle, or the like. To satisfy requirements of the electric apparatus 5 for high power and high energy density of the secondary battery, a battery pack may be used.

In another example, the electric apparatus may be a mobile phone, a tablet computer, a notebook computer, or the like. Such apparatus is typically required to be light and thin and may use a battery as its power source.

The following describes this application with reference to specific embodiments, but this application is not limited to the following embodiments. It should be understood that the appended claims provide summarization of the scope of this application, and under the guidance of the inventive concept, persons skilled in the art should recognize that certain modifications to the embodiments of this application fall within the spirit and scope of the claims of this application.

The following are specific examples.

Example 1

S1. Preparation of sodium battery

(1) Preparation of positive electrode plate

A binder polyvinylidene fluoride was fully dissolved in N-methylpyrrolidone, and a silicon compound, a conductive agent carbon black, and a positive electrode active material $Na_4Fe_3(PO_4)_2P_2O_7$ were added to prepare a uniformly dispersed active slurry. A solid content of the active slurry was 50%, and a viscosity at 25°C and atmospheric pressure was 8800 mPa·s. A mass ratio of the positive electrode active material, the conductive agent, the binder polyvinylidene fluoride, and the silicon compound was 80:10:9.5:0.5.

The active slurry was uniformly applied onto a surface of an aluminum foil, and then the foil was transferred to a vacuum drying oven for drying, where the foil was dried at 120°C for 2 h. The dried electrode plate was rolled and then punched to obtain a positive electrode plate.

A thickness of an active layer in the positive electrode plate was tested. Specifically, thicknesses of the positive electrode plate and a current collector were measured using a micrometer caliper, and a difference between the thicknesses was calculated to obtain the thickness of the active layer, where the thickness of the active layer was 204 μm.

An infrared spectrometer was used to perform a characterization test on components in the active layer of the positive electrode plate. The results showed characteristic peaks of a trimethylsilyl (TMS) group, and quantitative analysis of the components was performed based on relative absorption peak intensities of characteristic peaks in an infrared spectrum. The type of the silicon compound and its mass percentage H1 in the active layer are shown in Table 1.

A K-F type trace moisture tester was used to measure a water content in the active layer of the positive electrode plate. For specific steps, reference is made to the standard GB/T 11133-2015, Karl Fischer coulometric titration method. The results are shown in Table 1.

(2) Preparation of negative electrode plate

A binder sodium carboxymethyl cellulose CMC and a conductive agent carbon nanotubes were mixed at a mass

ratio of 3:2, then added to water, and stirred to form a uniform slurry with a solid content of 2%. The slurry was applied onto a surface of a copper foil. Then, the foil was transferred to a vacuum drying oven for complete drying, and then punched to obtain a negative electrode plate. A thickness of the formed slurry layer was 1.2 μm.

(3) Preparation of electrolyte

In an argon atmosphere glove box ($H_2O$ < 0.1 ppm, $O_2$ < 0.1 ppm), a sodium salt sodium hexafluorophosphate was dissolved in an organic solvent ethylene glycol dimethyl ether and stirred uniformly to obtain an electrolyte with a sodium hexafluorophosphate concentration of 1.0 mol/L.

(4) Separator: A polypropylene film was used as the separator.

(5) Preparation of sodium battery: The above positive electrode plate, separator, and negative electrode plate were stacked in sequence, with the separator positioned between the positive and negative electrode current collectors to provide isolation, and then the above electrolyte was added for assembly of a laminated battery.

S2. Performance test of sodium battery:

1. Coulombic efficiency

The prepared sodium battery was charged at 25°C at a constant current of 1/3C to 3.7 V, then charged at a constant voltage of 3.7 V until the current dropped to 0.05C to obtain an initial charge capacity (Cc1), and then discharged at a constant current of 1/3C to 2.5 V to obtain an initial discharge capacity (Cd1). The Coulombic efficiency of the sodium battery was calculated according to the following formula.

$$\text{Coulombic efficiency} = \text{initial discharge capacity (Cd1)} / \text{initial charge capacity (Cc1)} \times 100\%.$$

2. Capacity retention rate during cyclic use

The sodium battery was charged at 45°C at a constant current of 1C to 3.7 V, then charged at a constant voltage of 3.7 V until the current dropped to 0.05C, and then discharged at a constant current of 1C to 2.5 V to obtain a first cycle discharge capacity Cd1. This charge-discharge process was repeated for n cycles, to obtain a discharge capacity after n cycles of the sodium battery, denoted as Cdn. A capacity retention rate of the sodium battery was calculated according to the following formula.

Capacity retention rate Pn = discharge capacity after n cycles (Cdn) / first cycle discharge capacity (Cd1) × 100%. A capacity retention rate after 200 cycles was denoted as $P_{200}$.

3. Monitoring of sodium dendrite growth

The sodium battery which had experienced 200 cycles in the cycle test in the above step 2 was taken, and disassembled in an argon atmosphere glove box ($H_2O$ < 0.1 ppm, $O_2$ < 0.1 ppm); and the surface morphology of the negative electrode plate was visually observed to determine whether there were sodium dendrites produced, where if there was no white spot on the negative electrode plate, it was determined that there was no sodium dendrite; if there were sporadic white spots on the negative electrode plate, it was determined that there were a small amount of sodium dendrites; and if there were dense white spots on the negative electrode plate, it was determined that there were a large amount of sodium dendrites.

4. The sodium battery which had experienced 200 cycles in the cycle test in the above step 2 was taken, and disassembled in an argon atmosphere glove box ($H_2O$ < 0.1 ppm, $O_2$ < 0.1 ppm), and the negative electrode plate was made into small discs. After digestion treatment, an ICP-MS test was performed to analyze a content of transition metal Fe in the negative electrode plate after 200 cycles, which might be regarded as a dissolution amount of the transition metal Fe in the positive electrode plate, denoted as $F_0$.

Examples 2 to 15

Examples 2 to 15 were substantially the same as Example 1except that in step (1), during the preparation of the positive electrode plate, the type of the silicon compound or its mass percentage in the active layer differed from that in Example 1, where when the mass percentage of the silicon compound was adjusted, specifically, the respective mass percentages of the silicon compound and the binder were respectively adjusted while the total mass percentage of the silicon compound and the binder was kept constant, so as to make the mass percentage of the silicon compound different

from that in Example 1, and make the mass percentages of other components the same as that in Example 1. Specific parameters are shown in Table 1.

Other step conditions were the same as that in Example 1, and the test results are shown in Table 1.

Comparative Example 1

Comparative Example 1 was substantially the same as Example 1 except that in step (1), during the preparation of the positive electrode plate, no silicon compound was added, and the mass ratio of the positive electrode active material, the conductive agent, and the binder polyvinylidene fluoride was 80:10:10. Specific parameters are shown in Table 1.

Other step conditions were the same as that in Example 1, and the test results are shown in Table 1.

Comparative Example 2

Comparative Example 2 was substantially the same as Comparative Example 1 except that in step (1), the silicon compound was replaced with an equal mass of sodium dodecylbenzenesulfonate. Specific parameters are shown in Table 1.

Other step conditions were the same as that in Comparative Example 1, and the test results are shown in Table 1.

Comparative Example 3

Comparative Example 3 was substantially the same as Example 1 except that in step (1), during the preparation of the positive electrode plate, no silicon compound was added, and the mass ratio of the positive electrode active material, the conductive agent, and the binder polyvinylidene fluoride was 80:10:10; in addition, in step (3), during the preparation of the electrolyte, tris(trimethylsilyl) phosphate with a mass percentage of 2% was added to the electrolyte.

The relevant parameters and performance results of each example and comparative example are shown in Table 1. The mass percentage of the silicon compound in the active layer is denoted as H1, and the dissolution amount of the transition metal Fe in the positive electrode plate is denoted as $F_0$.

**Table 1**

| | **Positive electrode plate** | | | **Sodium battery** | | | |
|---|---|---|---|---|---|---|---|
| | Silicon compound | | Water content (ppm) | Coulombic efficiency (%) | $P_{200}$ (%) | Sodium dendrites | $F_0$ (ppm) |
| | Type | H1 (%) | | | | | |
| Example 1 | Tris(trimethylsilyl) phosphite TMSPi | 0.5 | 262 | 95.5 | 90.5 | None | 79 |
| Example 2 | Tris(trimethylsilyl) phosphate TMSP | 0.5 | 281 | 93.9 | 87.1 | None | 93 |
| Example 3 | Bis(trimethylsilyl) fluorophosphite | 0.5 | 308 | 93.2 | 86.4 | None | 102 |
| Example 4 | Tris(trimethylsilyl) borate TMSB | 0.5 | 275 | 94.1 | 85.5 | None | 188 |
| Example 5 | Hexamethyldisilazane HMDS | 0.5 | 316 | 92.3 | 84.9 | None | 207 |
| Example 6 | Tris(trimethylsilyl) phosphite TMSPi | 0.1 | 333 | 92.1 | 87.3 | None | 90 |
| Example 7 | Tris(trimethylsilyl) phosphite TMSPi | 1 | 251 | 95.1 | 89.9 | None | 85 |
| Example 8 | Tris(trimethylsilyl) phosphite TMSPi | 0.2 | 299 | 93 | 86.1 | None | 108 |
| Example 9 | Tris(trimethylsilyl) phosphite TMSPi | 1.2 | 246 | 91.5 | 86.8 | None | 87 |
| Example 10 | Bis(trimethylsilyl) difluorophosphate | 0.5 | 288 | 93.7 | 86.8 | None | 96 |

(continued)

| | Positive electrode plate | | | Sodium battery | | | |
|---|---|---|---|---|---|---|---|
| | Silicon compound | | Water content (ppm) | Coulombic efficiency (%) | $P_{200}$ (%) | Sodium dendrites | $F_0$ (ppm) |
| | Type | H1 (%) | | | | | |
| Example 11 | Tetrakis(trimethylsilyl) pyrophosphate | 0.5 | 304 | 92.8 | 86.0 | None | 110 |
| Example 12 | Bis(trimethylsilyl) vinyl phosphate | 0.5 | 280 | 93.9 | 87.3 | None | 90 |
| Example 13 | Tris(vinyldimethylsilyl) phosphate | 0.5 | 310 | 93.1 | 86.3 | None | 106 |
| Example 14 | Tris(phenyldimethylsilyl) phosphate | 0.5 | 320 | 91.7 | 84.4 | None | 121 |
| Example 15 | Trimethylsilyl methanesulfonate | 0.5 | 279 | 93.9 | 86.8 | None | 92 |
| Comparative Example 1 | / | / | 490 | 89.4 | 83.7 | Slight | 392 |
| Comparative Example 2 | Sodium dodecyl sulfate | 0.5 | 375 | 90.1 | 83.1 | Slight | 366 |
| Comparative Example 3 | / | / | 268 | 90.5 | 83.2 | None | 232 |
| Note: In Table 1, "/" indicates the absence of that substance or parameter. | | | | | | | |

Analysis of data in Table 1: From comparison results of Example 1 and Comparative Examples 1 and 2, it can be learned that in the electrode plate of this application, adding a silicon compound with a specific group to the electrode film layer can enhance the stability of the battery, thereby improving the Coulombic efficiency and cycling performance of the battery. Further, when the silicon compound also contains a phosphate group, the dissolution of transition metals such as iron in the electrode plate can be significantly suppressed, further improving the cycling performance of the battery.

Further, from comparison results of Example 1 and Comparative Example 3, it can be learned that adopting the technical solution of this application, for example, only adding a silicon compound with a specific group to the electrode film layer, can simultaneously achieve moisture removal and effective suppression of metal dissolution, whereas the silicon compound in the electrolyte only achieves a simple moisture removal function.

Research indicates that the reason for the above phenomena may be that phosphate or phosphinate groups on the surface of the electrode plate can react with oxidative substances generated during the charge-discharge process of the battery, reducing parasitic oxidation currents, suppressing the decomposition of electrode materials by oxidative substances, and enhancing the compositional stability of the electrode plate during the charge-discharge process. In contrast, the probability of contact between the silicon compound in the electrolyte and oxidative substances generated during the charge-discharge process is extremely low, making it essentially unable to effectively suppress metal dissolution.

The technical features of the above embodiments can be combined in any manner. For brevity of the description, not all possible combinations of the technical features in the above embodiments are described. However, as long as there is no contradiction in the combinations of these technical features, they should be considered as falling within the scope recorded in this specification.

The above embodiments only express several implementations of this application, with relatively specific and detailed descriptions, but they should not be construed as limiting the scope of the patent of this application. It should be noted that for persons of ordinary skill in the art, various variations and improvements can be made without departing from the concept of this application, and these all fall within the protection scope of this application. Therefore, the protection scope of the patent of this application should be subject to the appended claims, and the description and accompanying drawings can be used to interpret the content of the claims.

**Claims**

1. An electrode plate, wherein the electrode plate comprises a current collector and an electrode film layer disposed on a surface of the current collector, a composition of the electrode film layer comprises a silicon compound, and the silicon compound has a group represented by formula (A):

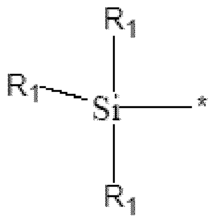

(A) ,

wherein each $R_1$ is independently selected from any one of hydrogen, a substituted or unsubstituted alkyl group, an alkoxy group, a substituted or unsubstituted aryl group, a substituted or unsubstituted heteroaryl group, and an unsaturated hydrocarbon group, and not all $R_1$ groups are hydrogen; and
"*" represents a site where the group represented by formula (A) is connected to another structure in the silicon compound.

2. The electrode plate according to claim 1, wherein each $R_1$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted chain alkoxy group having 1 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, and an alkynyl group having 2 to 30 carbon atoms, and
optionally, each $R_1$ is independently selected from any one of hydrogen, an unsubstituted chain alkyl group having 1 to 15 carbon atoms, a chain alkyl group having 1 to 15 carbon atoms and substituted by halogen, an unsubstituted cycloalkyl group having 3 to 15 carbon atoms, a cycloalkyl group having 3 to 15 carbon atoms and substituted by halogen, a chain alkoxy group having 1 to 15 carbon atoms, a substituted or unsubstituted aryl group having 6 to 20 ring atoms, a substituted or unsubstituted heteroaryl group having 5 to 20 ring atoms, an alkenyl group having 2 to 15 carbon atoms, and an alkynyl group having 2 to 15 carbon atoms.

3. The electrode plate according to claim 1, wherein the silicon compound further contains a D group, and the D group is selected from at least one of a borate group, a phosphate group, a phosphinate group, a sulfonate group, and an amino group,

   optionally, the D group is selected from at least one of a borate group, a phosphate group, and a phosphinate group, and the D group is connected to the group represented by formula (A) through an oxygen atom; and
   optionally, the D group is an amino group, and the D group is connected to the group represented by formula (A) through a nitrogen atom.

4. The electrode plate according to any one of claims 1 to 3, wherein the silicon compound comprises at least one represented by formulas (1) to (5):

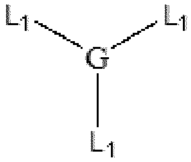

(1)

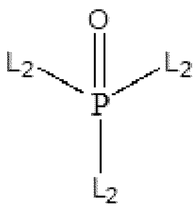

(2)

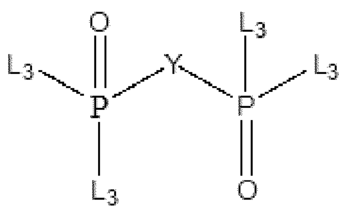

(3)

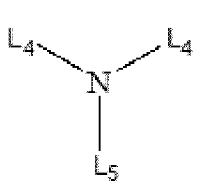 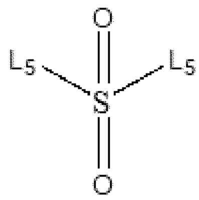

(4) (5) ,

wherein G is selected from boron or phosphorus, each $L_1$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_1$, and at least one $L_1$ group is $-OT_1$, $T_1$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_1$ group is the group represented by formula (A);
each $L_2$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_2$, and at least one $L_2$ group is $-OT_2$, $T_2$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_2$ group is the group represented by formula (A);
Y is selected from a single bond or oxygen, each $L_3$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_3$, at least one $L_3$ group is $-OT_3$, $T_3$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_3$ group is the group represented by formula (A);
each $L_4$ is independently selected from any one of hydrogen, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, and the group represented by formula (A), and at least one $L_4$ group is the group represented by formula (A); and
each $L_5$ is independently selected from any one of a halogen atom, a substituted or unsubstituted chain alkyl group having 1 to 30 carbon atoms, a substituted or unsubstituted cycloalkyl group having 3 to 30 carbon atoms, a substituted or unsubstituted aryl group having 6 to 50 ring atoms, a substituted or unsubstituted heteroaryl group having 5 to 50 ring atoms, an alkenyl group having 2 to 30 carbon atoms, an alkynyl group having 2 to 30 carbon atoms, the group represented by formula (A), and $-OT_3$, at least one $L_5$ group is $-OT_4$, $T_4$ is selected from any one of hydrogen, the group represented by formula (A), a substituted or unsubstituted alkyl group, a substituted or unsubstituted aryl group, a substituted or unsubstituted heteroaryl group, and an unsaturated hydrocarbon group, and at least one $T_4$ group is the group represented by formula (A).

**5.** The electrode plate according to claim 4, wherein the silicon compound satisfies any one of the following conditions (1) to (5):

(1) at least two $L_1$ groups are selected from $-OT_1$;

optionally, $T_1$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and

an alkynyl group having 2 to 30 carbon atoms; and
further optionally, at least two $T_1$ groups are selected from the group represented by formula (A);

(2) at least two $L_2$ groups are selected from $-OT_2$; and

optionally, $T_2$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and
further optionally, at least two $T_2$ groups are selected from the group represented by formula (A);

(3) at least two $L_3$ groups are selected from $-OT_3$; and

optionally, $T_3$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and
further optionally, at least two $T_3$ groups are selected from the group represented by formula (A);

(4) each $L_4$ is independently selected from any one of hydrogen, an unsubstituted chain alkyl group having 1 to 30 carbon atoms, a chain alkyl group having 1 to 30 carbon atoms and substituted by halogen, an unsubstituted cycloalkyl group having 3 to 30 carbon atoms, a cycloalkyl group having 3 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 15 carbon atoms, an alkynyl group having 2 to 15 carbon atoms, and the group represented by formula (A); and
optionally, at least two $L_4$ groups are selected from the group represented by formula (A);
(5) at least two $L_5$ groups are selected from $-OT_5$; and

optionally, $T_4$ is selected from any one of hydrogen, the group represented by formula (A), an unsubstituted chain alkyl group having 1 to 30 carbon atoms, a chain alkyl group having 1 to 30 carbon atoms and substituted by halogen, a substituted or unsubstituted aryl group having 6 to 30 ring atoms, a substituted or unsubstituted heteroaryl group having 5 to 30 ring atoms, an alkenyl group having 2 to 30 carbon atoms, and an alkynyl group having 2 to 30 carbon atoms; and
further optionally, at least two $T_4$ groups are selected from the group represented by formula (A).

**6.** The electrode plate according to claim 4, wherein the silicon compound comprises at least one represented by formulas (1) to (3); and
optionally, G is phosphorus.

**7.** The electrode plate according to any one of claims 1 to 6, wherein the silicon compound comprises at least one of tris(trimethylsilyl) borate, tris(trimethylsilyl) phosphate, tris(trimethylsilyl) phosphite, bis(trimethylsilyl) difluorophosphate, tetrakis(trimethylsilyl) pyrophosphate, bis(trimethylsilyl) monofluoropyrophosphate, bis(trimethylsilyl) fluorophosphite, trimethylsilyl difluorophosphate, hexamethyldisilazane, bis(trimethylsilyl) vinyl phosphate, tris(vinyldimethylsilyl) phosphate, tris(phenyldimethylsilyl) phosphate, trimethylsilyl methanesulfonate, heptamethyldisilazane, and ethylhexamethyldisilazane.

**8.** The electrode plate according to any one of claims 1 to 7, wherein the silicon compound comprises at least one of tris(trimethylsilyl) phosphite, tris(trimethylsilyl) phosphate, bis(trimethylsilyl) fluorophosphite, tris(trimethylsilyl) borate, hexamethyldisilazane, bis(trimethylsilyl) difluorophosphate, tetrakis(trimethylsilyl) pyrophosphate, bis(trimethylsilyl) vinyl phosphate, tris(vinyldimethylsilyl) phosphate, tris(phenyldimethylsilyl) phosphate, and trimethylsilyl methanesulfonate; and
optionally, the silicon compound comprises at least one of tris(trimethylsilyl) phosphite, tris(trimethylsilyl) phosphate, bis(trimethylsilyl) fluorophosphite, bis(trimethylsilyl) difluorophosphate, tetrakis(trimethylsilyl) pyrophosphate, bis(trimethylsilyl) vinyl phosphate, tris(vinyldimethylsilyl) phosphate, and tris(phenyldimethylsilyl) phosphate.

**9.** The electrode plate according to any one of claims 1 to 8, wherein in the electrode film layer, a mass percentage of the

silicon compound is 0.1% to 1.2%; and
optionally, the mass percentage of the silicon compound is 0.2% to 1%.

**10.** The electrode plate according to any one of claims 1 to 9, wherein the composition of the electrode film layer further comprises a positive electrode active material, and the positive electrode active material satisfies one of the following conditions (1) to (3):

(1) the positive electrode active material comprises any one of a positive electrode active material for lithium-ion batteries, a positive electrode active material for sodium-ion batteries, and a positive electrode active material for potassium-ion batteries;
(2) the positive electrode active material contains a transition metal element, and
optionally, the transition metal comprises iron element; and
(3) in the electrode film layer, a mass percentage of the positive electrode active material is 70% to 99.8%.

**11.** The electrode plate according to claim 10, wherein the positive electrode active material is a positive electrode active material for sodium-ion batteries.

**12.** The electrode plate according to claim 10 or 11, wherein the positive electrode active material comprises at least one of $NaFePO_4$, $Na_3V_2(PO_4)_3$, $Na_4Fe_3(PO_4)_2(P_2O_7)$, $NaM1PO_4F$, $Na_aM2_bM3_c(CN)_6$, and $Na_3(VO_y)_2(PO_4)_2F_{(3-2y)}$;
wherein M2 and M3 are each independently selected from at least one of Ni, Cu, Fe, Mn, Co, and Zn; $0 < a \leq 2$; $0 < b < 1$; $0 < c < 1$; M1 is selected from at least one of V, Fe, Mn; and Ni, $0 \leq y \leq 1$.

**13.** The electrode plate according to any one of claims 1 to 12, wherein the composition of the electrode film layer further comprises a conductive agent and a binder;
optionally, in the electrode film layer, a mass percentage of the conductive agent is 1% to 20%; and optionally, in the electrode film layer, a mass percentage of the binder is 1% to 10%.

**14.** The electrode plate according to any one of claims 1 to 13, wherein a water content of the electrode film layer is ≤ 400 ppm; and
optionally, the water content of the electrode film layer is ≤ 350 ppm.

**15.** A preparation method of the electrode plate according to any one of claims 1 to 14, comprising the following steps:

applying a film layer slurry onto a surface of a current collector to form an electrode film layer for preparing an electrode plate; wherein
a composition of the film layer slurry comprises a silicon compound.

**16.** A battery, wherein the battery comprises the electrode plate according to any one of claims 1 to 14 or an electrode plate prepared using the preparation method of the electrode plate according to claim 15.

**17.** An electric apparatus, wherein the electric apparatus comprises the battery according to claim 16.

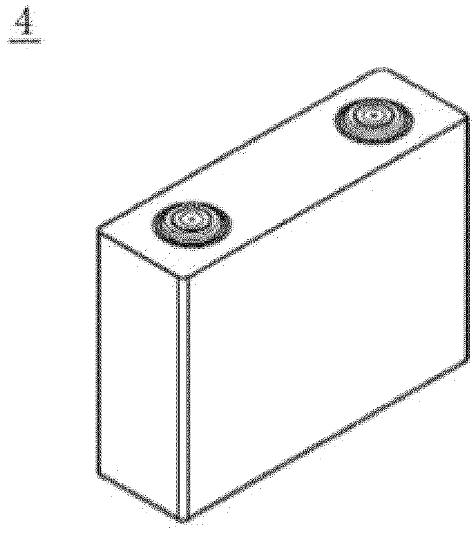


FIG. 1

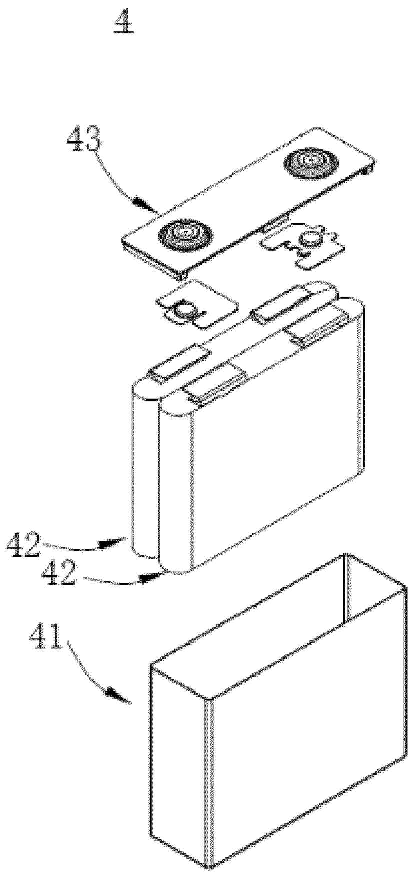


FIG. 2

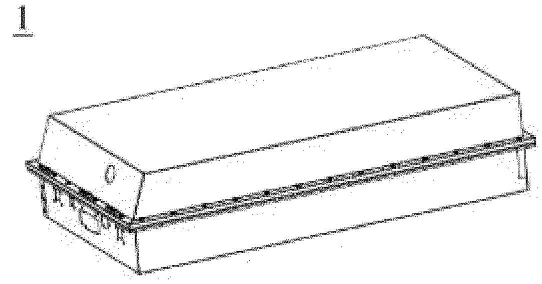


FIG. 3

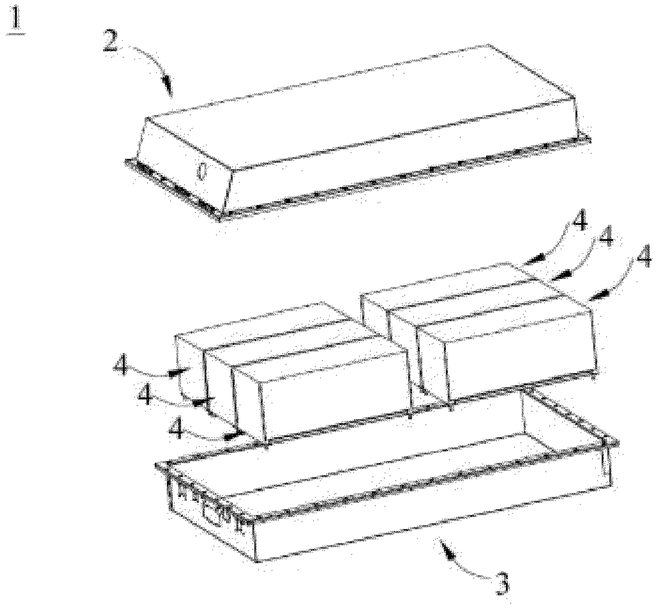


FIG. 4

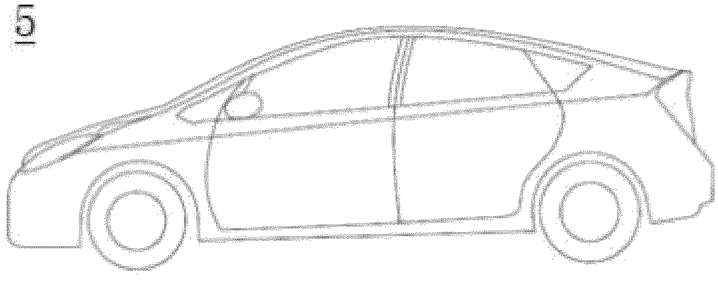


FIG. 5

**INTERNATIONAL SEARCH REPORT**

International application No.
**PCT/CN2023/132189**

**A. CLASSIFICATION OF SUBJECT MATTER**

H01M4/525(2010.01)i; H01M10/0567(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 硅, 磷酸, 硼酸, 磺酸, 酯, 胺, 除, 水, 酸, 电极, 正极, 负极, 阳极, 阴极, Si, phosphoric, boric, sulfonic, ester, amino, remove, water, acid, HF, electrode, anode, cathode

**C. DOCUMENTS CONSIDERED TO BE RELEVANT**

| Category* | Citation of document, with indication, where appropriate, of the relevant passages | Relevant to claim No. |
|---|---|---|
| X | CN 105659425 A (LG CHEMICAL LTD.) 08 June 2016 (2016-06-08)<br>description, paragraphs 16-165 | 1-17 |
| X | CN 115172747 A (GUANGDONG MACHE POWER TECHNOLOGY CO., LTD.) 11 October 2022 (2022-10-11)<br>description, paragraphs 15-73 | 1-17 |
| A | CN 106025359 A (ZHUHAI SMOOTHWAY ELECTRONIC MATERIALS CO., LTD.) 12 October 2016 (2016-10-12)<br>entire document | 1-17 |
| A | CN 105914399 A (NINGDE AMPEREX TECHNOLOGY LTD.) 31 August 2016 (2016-08-31)<br>entire document | 1-17 |
| A | CN 111525192 A (DONGGUAN SHANSHAN BATTERY MATERIALS CO., LTD.) 11 August 2020 (2020-08-11)<br>entire document | 1-17 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **05 February 2024** | **26 February 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/132189**

**C. DOCUMENTS CONSIDERED TO BE RELEVANT**

| Category* | Citation of document, with indication, where appropriate, of the relevant passages | Relevant to claim No. |
|---|---|---|
| A | WO 2021218640 A1 (HUAWEI TECHNOLOGIES CO., LTD.) 04 November 2021 (2021-11-04)<br>entire document | 1-17 |

Form PCT/ISA/210 (second sheet) (July 2022)

**INTERNATIONAL SEARCH REPORT**
**Information on patent family members**

International application No.
**PCT/CN2023/132189**

| Patent document cited in search report | | | Publication date (day/month/year) | Patent family member(s) | | | Publication date (day/month/year) |
|---|---|---|---|---|---|---|---|
| CN | 105659425 | A | 08 June 2016 | WO | 2015064987 | A1 | 07 May 2015 |
| | | | | US | 2015325879 | A1 | 12 November 2015 |
| | | | | US | 10115968 | B2 | 30 October 2018 |
| | | | | JP | 2016504725 | A | 12 February 2016 |
| | | | | JP | 6241015 | B2 | 06 December 2017 |
| | | | | TW | 201539835 | A | 16 October 2015 |
| | | | | TWI | 539643 | B | 21 June 2016 |
| | | | | US | 2019013520 | A1 | 10 January 2019 |
| | | | | US | 10826063 | B2 | 03 November 2020 |
| | | | | EP | 2908375 | A1 | 19 August 2015 |
| | | | | EP | 2908375 | A4 | 23 December 2015 |
| | | | | EP | 2908375 | B1 | 19 September 2018 |
| | | | | KR | 20150048658 | A | 07 May 2015 |
| | | | | KR | 101640994 | B1 | 19 July 2016 |
| CN | 115172747 | A | 11 October 2022 | | None | | |
| CN | 106025359 | A | 12 October 2016 | | None | | |
| CN | 105914399 | A | 31 August 2016 | | None | | |
| CN | 111525192 | A | 11 August 2020 | | None | | |
| WO | 2021218640 | A1 | 04 November 2021 | CN | 113571769 | A | 29 October 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310741188